(19) Europäisches Patentamt
European Patent Office
Office européen des brevets

(11) EP 2 426 401 A1

(12) EUROPEAN PATENT APPLICATION
published in accordance with Art. 153(4) EPC

(43) Date of publication:
07.03.2012 Bulletin 2012/10

(21) Application number: 11765294.1

(22) Date of filing: 01.03.2011

(51) Int Cl.:
F21S 2/00 (2006.01)    F21V 9/10 (2006.01)
G02F 1/1334 (2006.01)    G02F 1/13357 (2006.01)
G02F 1/1347 (2006.01)    F21Y 101/02 (2006.01)

(86) International application number:
PCT/JP2011/054645

(87) International publication number:
WO 2011/125392 (13.10.2011 Gazette 2011/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 07.04.2010 JP 2010089044

(71) Applicant: Sony Corporation
Tokyo 108-0075 (JP)

(72) Inventors:
• SATO Yoshihisa
Tokyo 108-0075 (JP)
• NAGAI Hiroyuki
Tokyo 108-0075 (JP)
• OKUYAMA Kentaro
Tokyo 108-0075 (JP)

(74) Representative: Horner, David Richard
D Young & Co LLP
120 Holborn
London EC1N 2DY (GB)

(54) DISPLAY DEVICE AND LIGHTING DEVICE

(57) A display capable of improving both of display luminance and display quality in three-dimensional display, and an illumination device for such a display are provided. In three-dimensional display, in a light modulation element 30, each light modulation cell 30-1 serves as a scattering region 30B, and each light modulation cell 30-2 serves as a transmission region 30A. Therefore, light emitted from a light source 20 and entering into a light guide plate 10 passes through the transmission region 30A, and is scattered in the scattering region 30B, thereby allowing a plurality of linear illumination light rays to be emitted toward a front direction. Respective linear illumination light rays emitted toward the front direction enter into a back surface of a display panel 210, and repsecitve linear illumination light rays enter into pixels 210-1, 210-2, 210-3 or 210-4 in the same position in respective three-dimensional pixels 210A at a substantially equal angle; therefore, pixels in the same position in respective three-dimensional pixels 210A emit picture light modulated by the pixels at a predetermined angle.

FIG. 16

EP 2 426 401 A1

## Description

TECHNICAL FIELD

The present invention relates to a display capable of performing two-dimensional display (planar display) and three-dimensional display (stereoscopic display), and an illumination device suitably applicable to such a display as a backlight.

BACKGROUND ART

Displays capable of performing three-dimensional display include displays in need of wearing special glasses for three-dimensional display and displays without need of the special glasses. In the latter displays, a lenticular lens or a parallax barrier is used to perceive a stereoscopic picture with naked eyes. When picture information is distributed into right and left eyes by the lenticular lens or the parallax barrier, the right and left eyes see different pictures, respectively, and as a result, three-dimensional display is achivable.

Three-dimensional display brings realism, but resolution is reduced. Therefore, a technique of performing two-dimensional display without impairing resolution is disclosed in PTL 1. In PTL 1, a parallax barrier is configured of a liquid crystal element, and in three-dimensional display, the liquid crystal element serves as a parallax barrier by forming an opaque section therein. Then, in two-dimensional display, the liquid crystal element does not serve as the parallax barrier by turning an entire surface thereof into a transmission state, and an entire picture on a display screen uniformly enters into the right and left eyes, thereby achieving two-dimensional display.

[Citation list]

[Patent Literature]

[PTL 1] Japanese Unexamined Patent Application Publication No. H3-119889
[PTL 2] Japanese Unexamined Patent Application Publication No. H11-285030

DISCLOSURE OF THE INVENTION

However, in a method described in PTL 1, in three-dimensional display, light is absorbed by the parallax barrier to cause an issue that display luminance is low.

PTL 2 discloses a technique of curbing a reduction in luminance with use of a cylindrical lens and a polymer dispersed liquid crystal (PDLC) instead of the parallax barrier. However, in a method described in PTL 2, there is an issue that when a viewer sees a display screen from an oblique direction, display quality is deteriorated due to aberration of the cylindrical lens.

The present invention is made to solve the above-described issues, and it is an object of the invention to provide a display capable of improving both of display luminance and display quality in three-dimensional display, and an illumination device for such a display.

A display according to the invention includes: a display panel including a plurality of pixels arranged in a matrix form, the plurality of pixels being driven in response to an image signal for two-dimensional display or three-dimensional display; and an illumination device illuminating the display panel. The illumination device included in the display includes: a first transparent member and a second transparent member being separated from and facing each other; and a light source disposed on a side surface of the first transparent member. The illumination device further includes: a first electrode disposed on a surface of the first transparent member; a second electrode disposed on a surface of the second transparent member; a light modulation layer disposed in a gap between the first transparent member and the second transparent member, and exhibiting a scattering property or transparency with respect to light from the light source, depending on the magnitude of an electric field; and a drive section driving the light modulation layer with use of the first electrode and the second electrode. The light modulation layer includes a first region and a second region both having optical anisotropy, and having response speeds with respect to an electric field, the response speeds being different from each other. The first region mainly includes a liquid crystal material. The second region mainly includes a polymer material, and has a streaky structure, a porous structure, or a rod-like structure with a response speed with respect to the electric field, the response speed being slower than that of the first region. At least one of the first electrode and the second electrode is configured of a plurality of sub-electrodes. In the case where three-dimensional display is performed, while the drive section applies, to a plurality of specific first sub-electrodes in the plurality of sub-electrodes, a voltage allowing the light modulation layer to exhibit the scattering property, the drive section applies, to a plurality of second sub-electrodes other than the plurality of first sub-electrodes in the plurality of sub-electrodes, a voltage allowing the light modulation layer to exhibit transparency, thereby allowing a plurality of linear illumination light rays to be emitted.

In the display according to the invention, for example, in the case where two-dimensional display is performed, the drive section applies, to all of the plurality of sub-electrodes, a voltage allowing the light modulation layer to exhibit the scattering property, to allow entirely bright planar illumination light to be emitted. Moreover, in the case where two-dimensional display is performed, while the drive section applies, to some of the plurality of sub-electrodes, a voltage allowing the light modulation layer to exhibit the scattering property, the drive section applies, to one or a plurality of sub-electrodes to which the voltage allowing the light modulation layer to exhibit the scattering property is not applied in the plurality of sub-electrodes, a voltage allowing the light modulation layer to exhibit transparency, to allow partially dark planar illumination light to be emitted.

An illumination device according to the invention is an illumination device for a display allowed to perform three-dimensional display and three-dimensional display. The illumination device includes the same components as those of the illumination device in the above-described display.

In the illumination device and the display according to the invention, the light modulation layer exhibiting the scattering property or transparency with respect to light from the light source, depending on the magnitude of an electric field is provided. Therefore, light propagating through a light guide plate is allowed to be extracted from a region exhibiting the scattering property (a scattering region). Moreover, in the invention, in the case where three-dimensional display is performed, while a voltage allowing the light modulation layer to exhibit the scattering property is applied to a plurality of specific first sub-electrodes, a voltage allowing the light modulation layer to exhibit transparency is applied to a plurality of second sub-electrodes, thereby allowing a plurality of linear illumination light rays to be emitted. As each linear illumination light ray enters into a back surface of the display panel, for example, when a three-dimensional picture signal is applied to allow respective pixel rows in a pixel arrangement corresponding to linear illumination light rays to serve as three-dimensional pixels, linear illumination light rays enter, at a substantially equal angle, into pixels in the same position in respective three-dimensional pixels, and the pixels in the same position in the respective three-dimensional pixels emit picture light modulated by the pixels. Therefore, as a viewer views different pictures having a parallax therebetween with his right and left eyes, the viewer perceives that a three-dimensional picture is displayed on the display panel. Incidentally, in the invention, in three-dimensional display, it is not necessary to provide a parallax barrier; however, even if the parallax barrier is provided on a light emission side of the illumination device, at this time, the light modulation layer emits only linear light; therefore, the proportion of linear illumination light rays emitted from the light modulation layer and absorbed by the parallax barrier is low. Moreover, in the invention, as a cylindrical lens is not necessary in three-dimensional display, there is no possibility that an issue of aberration caused by the cylindrical lens occurs.

In the illumination device and the display according to the invention, as a part of the light modulation layer serves as a scattering region, a plurality of linear illumination light rays are emitted from the illumination device; therefore, both of display luminance and display quality in three-dimensional display are allowed to be improved.

BRIEF DESCRIPTION OF THE DRAWINGS

[FIG. 1] FIG. 1 is a diagram illustrating an example of a television broadcast signal transmitter/receiver system according to a first embodiment of the invention.

[FIG. 2] FIG. 2 is a diagram illustrating an example of functional blocks of a receiver-side apparatus in FIG. 1.

[FIG. 3] FIG. 3 is a sectional view illustrating an example of configurations of a display panel and a backlight in the receiver-side apparatus in FIG. 1.

[FIG. 4] FIG. 4 is a sectional view illustrating another example of configurations of the display panel and the backlight in FIG. 3.

[FIG. 5] FIG. 5 is a sectional view illustrating an example of a configuration of a light modulation element in FIG. 3.

[FIG. 6] FIG. 6 is a perspective view illustrating an example of an electrode configuration in FIG. 5.

[FIG. 7] FIG. 7 is a diagram illustrating an example of optical properties of an ITO film and positional dependence of chromaticity change in the backlight.

[FIG. 8] FIG. 8 is a diagram illustrating an example of positional dependence of guided light spectrum.

[FIG. 9] FIG. 9 is a schematic view for describing an example of a function of the light modulation element in FIG. 3.

[FIG. 10] FIG. 10 is a schematic view for describing another example of the function of the light modulation element in FIG. 3.

[FIG. 11] FIG. 11 is a schematic view for describing an example of a function of the backlight in FIG. 3.

[FIG. 12] FIG. 12 is a diagram illustrating an example of a streaky structure in a bulk in FIG. 5.

[FIG. 13] FIG. 13 is a sectional view for describing a step of manufacturing the light modulation element in FIG. 3.

[FIG. 14] FIG. 14 is a sectional view for describing a manufacturing step following FIG. 13.

[FIG. 15] FIG. 15 is a sectional view for describing a manufacturing step following FIG. 14.

[FIG. 16] FIG. 16 is a schematic view for describing three-dimensional display in the receiver-side apparatus in FIG. 3.

[FIG. 17] FIG. 17 is a schematic view for describing two-dimensional display in the receiver-side apparatus in FIG. 3.

[FIG. 18] FIG. 18 is a schematic view for describing a function of the light modulation element in FIG. 3.

[FIG. 19] FIG. 19 is a schematic view for describing the function of the light modulation element in FIG. 3.

[FIG. 20] FIG. 20 is a diagram for describing effects of the light modulation element in FIG. 3 and a comparative example.

[FIG. 21] FIG. 21 is a diagram illustrating an example of an apparatus measuring optical characteristics of the light modulation element.

[FIG. 22] FIG. 22 is a diagram illustrating a result determined by a measurement with the apparatus in FIG. 21.

[FIG. 23] FIG. 23 is a diagram illustrating a result determined by a measurement with the apparatus in FIG. 21.

[FIG. 24] FIG. 24 is a conceptual diagram for describing isotropic scattering.

[FIG. 25] FIG. 25 is a conceptual diagram for describing anisotropic scattering.

[FIG. 26] FIG. 26 is a schematic view for describing an example of a function of a light modulation element mounted in a backlight according to a second embodiment of the invention.

[FIG. 27] FIG. 27 is a schematic view for describing another example of the function of the light modulation element in FIG. 26.

[FIG. 28] FIG. 28 is a sectional view illustrating an example of a first modification example of a configuration of the receiver-side apparatus in FIG. 3.

[FIG. 29] FIG. 29 is a sectional view illustrating another example of the first modification example of the configuration of the receiver-side apparatus in FIG. 3.

[FIG. 30] FIG. 30 is a sectional view illustrating a second modification example of the configuration of the receiver-side apparatus in FIG. 3.

[FIG. 31] FIG. 31 is a sectional view illustrating a third modification example of the configuration of the receiver-side apparatus in FIG. 3.

[FIG. 32] FIG. 32 is a sectional view illustrating an example of a configuration of a parallax barrier in FIG. 31.

[FIG. 33] FIG. 33 is a perspective view illustrating a first modification example of the electrode configuration in FIG. 5.

[FIG. 34] FIG. 34 is a perspective view illustrating a second modification example of the electrode configuration in FIG. 5.

[FIG. 35] FIG. 25 is a perspective view illustrating a third modification example of the electrode configuration in FIG. 5.

[FIG. 36] FIG. 36 is a plan view illustrating a fourth modification example of the electrode configuration in FIG. 5.

[FIG. 37] FIG. 37 is a plan view illustrating a fifth modification example of the electrode configuration in FIG. 5.

[FIG. 38] FIG. 38 is a plan view illustrating a sixth modification example of the electrode configuration in FIG. 5.

[FIG. 39] FIG. 39 is a plan view illustrating a seventh modification example of the electrode configuration in FIG. 5.

[FIG. 40] FIG. 40 is a plan view illustrating an eighth modification example of the electrode configuration in FIG. 5.

[FIG. 41] FIG. 41 is a plan view illustrating a ninth modification example of the electrode configuration in FIG. 5.

[FIG. 42] FIG. 42 is a sectional view illustrating another example of the configuration of the parallax barrier in FIG. 31.

[FIG. 43] FIG. 43 is a schematic view for describing a method of time-divisionally performing three-dimensional display in the receiver-side apparatus in FIG. 3.

[FIG. 44] FIG. 44 is a schematic view for describing the method of time-divisionally performing three-dimensional display in the receiver-side apparatus in FIG. 3.

BEST MODE(S) FOR CARRYING OUT THE INVENTION

Best modes for carrying out the invention will be described in detail below referring to the accompanying drawings. It is to be noted that description will be given in the following order.

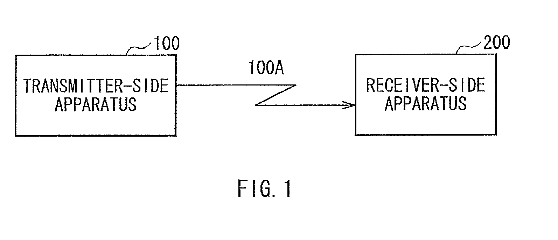

1. First Embodiment (FIGs. 1 to 25)

Example in which a light modulation element (horizontally-aligned PDLC) is used in a backlight

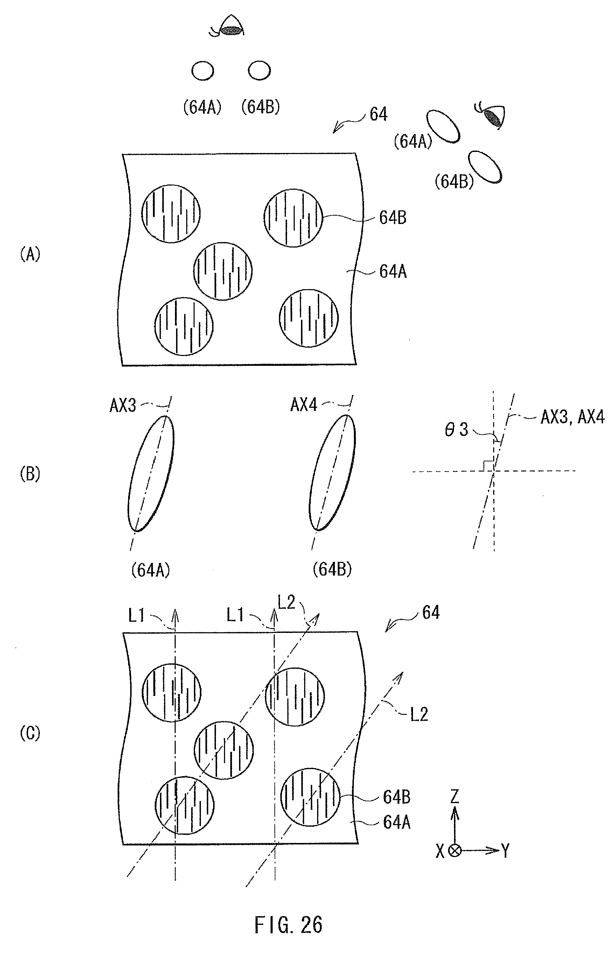

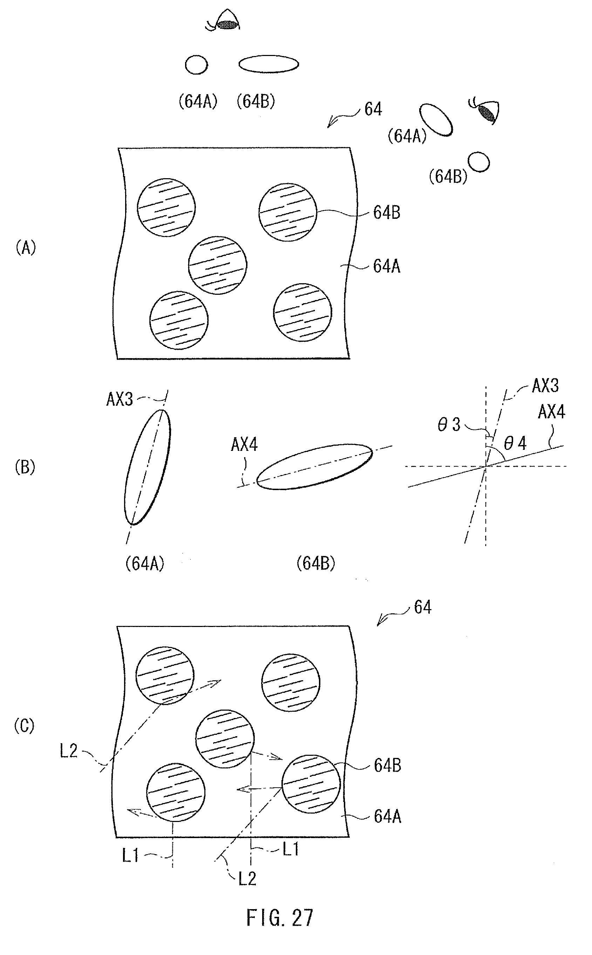

2. Second Embodiment (FIGs. 26 and 27)

Example in which a light modulation element (vertically-aligned PDLC) is used in a backlight

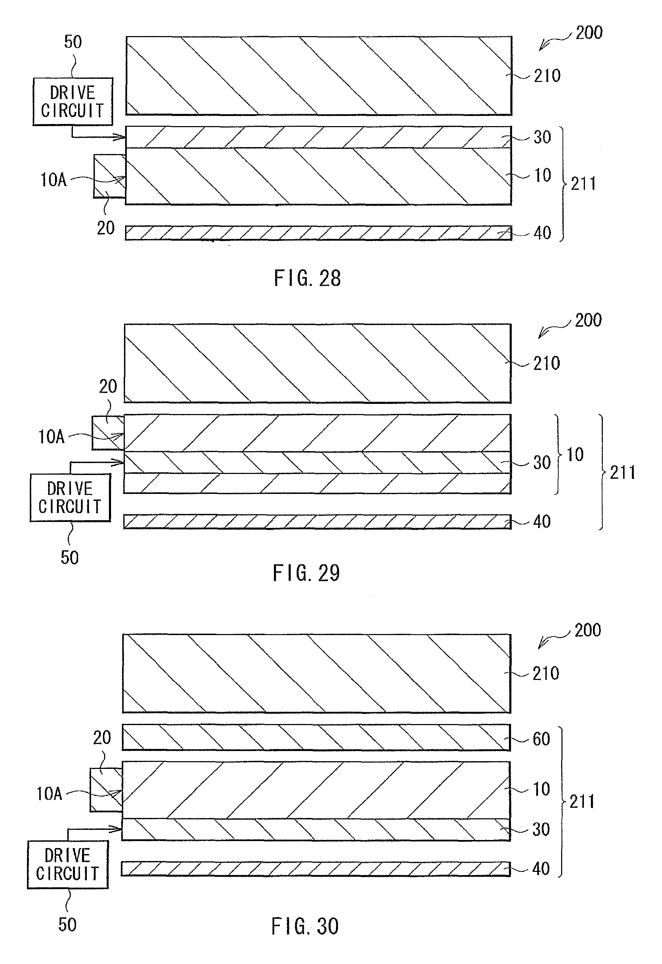

3. Modification Examples (FIGs. 28 to 44)

Example in which the position of the light modulation element is changed
Example in which an optical sheet is added
Example in which a parallax barrier is added
Example in which an electrode configuration is changed

(First Embodiment)

[Configuration of television broadcast signal transmitter/ receiver system]

FIG. 1 is a block diagram illustrating a configuration example of a transmitter/receiver system, which includes a receiver-side apparatus 200, for a television broadcast signal 100A according to a first embodiment of the invention. The transmitter/receiver system includes a transmitter-side apparatus 100 transmitting a television broadcast signal through, for example, wired communications (such as cable TV) or wireless communications (such as terrestrial digital waves or satellite waves), and the receiver-side apparatus 200 receiving the television broadcast signal from the transmitter-side apparatus 100 through the above-described wired or wireless communications. It is to be noted that the receiver-side apparatus 200 corresponds to a specific example of "display" in the invention.

The television broadcast signal 100A includes picture data for two-dimensional display (planar display) or picture data for three-dimensional display (stereoscopic display). In this description, the picture data for two-dimensional display refers to two-dimensional picture data without viewpoint information. Moreover, the picture data for three-dimensional display refers to two-dimensional picture data with viewpoint information, and the picture data for three-dimensional display includes plural pieces of two-dimensional picture data with viewpoints different from one another. The transmitter-side apparatus 100 is, for example, a television broadcast signal transmitter installed in a broadcasting station, or a server on the Internet.

[Functional block of receiver-side apparatus 200]

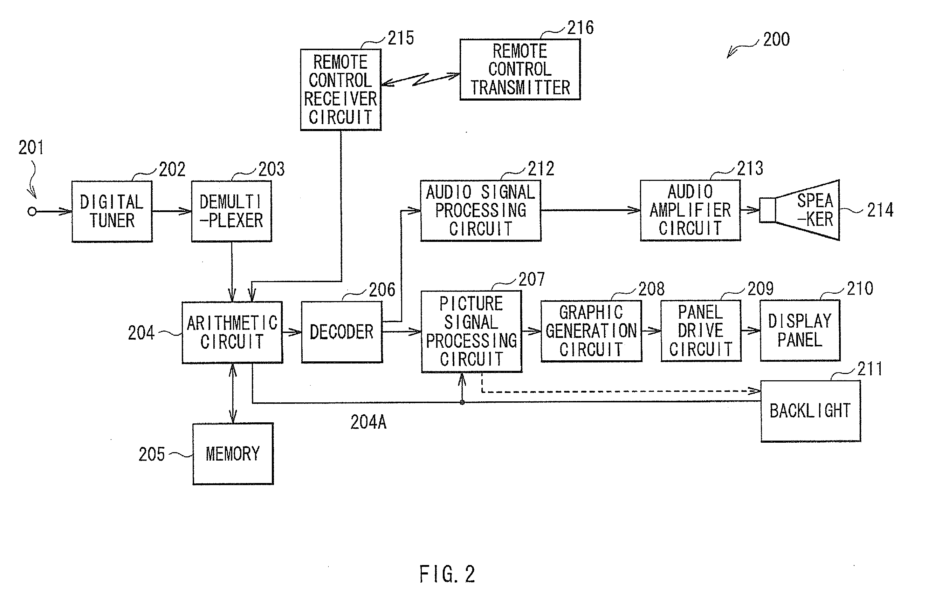

FIG. 2 is a block diagram of a configuration example of the receiver-side apparatus 200. The receiver-side apparatus 200 is a display capable of performing two-dimensional display and three-dimensional display, and is, for example, a television capable of being connected to the above-described wired or wireless communications. The receiver-side apparatus 200 includes, for example, an antenna terminal 201, a digital tuner 202, a demultiplexer 203, an arithmetic circuit 204, and a memory 205. The receiver-side apparatus 200 further includes, for example, a decoder 206, a picture signal processing circuit 207, a graphic generation circuit 208, a panel drive circuit 209, a display panel 210, a backlight 211, an audio signal processing circuit 212, an audio amplifier circuit 213, and a speaker 214. The receiver-side apparatus 200 further includes, for example, a remote control receiver circuit 215 and a remote control transmitter 216. It is to be noted that the backlight 211 corresponds to a specific example of "illumination device" in the invention.

The antenna terminal 201 is a terminal receiving a television broadcast signal received by a receiving antenna (not illustrated). For example, the digital tuner 202 processes the television broadcast signal having entered into the antenna terminal 201 to output a predetermined transport stream associated with a channel selected by a user. For example, the demultiplexer 203 extracts a partial TS (Transport Stream) associated with the channel selected by the user from the transport stream obtained in the digital tuner 202.

The arithmetic circuit 204 controls operations of respective components of the receiver-side apparatus 200. For example, the arithmetic circuit 204 stores the partial TS obtained by the demultiplexer 203 in the memory 205, or transmits the partial TS read from the memory 205 to the decoder 206. Moreover, for example, the arithmetic circuit 204 transmits a control signal 204A indicating two-dimensional display or three-dimensional display to the picture signal processing circuit 207 and the backlight 211. The arithmetic circuit 204 sets the above-described control signal 204A based on, for example, setting information stored in the memory 205, predetermined information included in the partial TS, or setting information supplied from the remote control receiver circuit 215.

For example, the memory 205 stores the setting information of the receiver-side apparatus 200 and manages data. The memory 205 is allowed to store therein, for example, the partial TS obtained by the demultiplexer 203 or setting information such as display method.

For example, the decoder 206 performs a decoding process on a picture PES (Packetized Elementary Stream) packet included in the partial TS which is obtained by the demultiplexer 203 to obtain picture data. For example, the decoder 206 also performs a decoding process on an audio PES packet included in the partial TS which is obtained by the demultiplexer 203 to obtain audio data. In this description, the picture data refers to picture data for two-dimensional display or picture data for three-dimensional display.

For example, the picture signal processing circuit 207 and the graphic generation circuit 208 perform, as necessary, multiple image processing, graphic data superimposing process, or the like on the picture data obtained by the decoder 206.

In the case where the picture signal processing circuit 207 receives a signal indicating three-dimensional display as the control signal 204A from the arithmetic circuit 204, and picture data supplied from the decoder 206 is picture data for three-dimensional display, the picture signal processing circuit 207 produces, for example, one piece of two-dimensional picture data with use of plural pieces of two-dimensional picture data with viewpoint different from one another included in the picture data for three-dimensional display supplied from the decoder 206 to select the produced two-dimensional picture data as picture data to be supplied to the graphic generation circuit 208. For example, in the case where the picture data for three-dimensional display includes two pieces of two-dimensional picture data with viewpoints different from each other, the picture signal processing circuit 207 performs a process of alternately arranging the two pieces of two-dimensional picture data in a horizontal direction from one row to another to produce one piece of picture data in which the two pieces of two-dimensional picture data are alternately arranged in the horizontal direction. Likewise, for example, in the case where the picture data for three-dimensional display includes four pieces of two-dimensional picture data with viewpoints different from one another, the picture signal processing circuit 207 performs a process of periodically alternately arranging the four pieces of two-dimensional picture data in the horizontal direction from one row to another to produce one piece of picture data in which four pieces of two-dimensional picture data are periodically alternately arranged in the horizontal direction.

In the case where the picture signal processing circuit 207 receives a signal indicating two-dimensional display as the control signal 204A from the arithmetic circuit 204, and picture data supplied from the decoder 206 is picture data for three-dimensional display, for example, the picture signal processing circuit 207 selects, as picture data to be supplied to the graphic generation circuit 208, one piece of picture data from plural pieces of two-dimensional picture data with viewpoints different from one another which are included in picture data for three-dimensional display supplied from the decoder 206. In the case where the picture signal processing circuit 207 receives a signal indicating two-dimensional display as the control signal 204A from the arithmetic circuit 204, and the picture data supplied from the decoder 206 is picture data for two-dimensional display, for example, the picture signal processing circuit 207 selects picture data for two-dimensional display supplied from the decoder 206 as picture data to be supplied to the graphic generation circuit 208.

The graphic generation circuit 208 generates, for example, a UI (User Interface) screen used for screen display. For example, the panel drive circuit 209 drives the display panel 210 based on picture data supplied from the graphic generation circuit 208.

Configurations of the display panel 210 and the backlight 211 will be described in detail later. For example, the audio signal processing circuit 212 performs a process such as D/A conversion on audio data obtained by the decoder 206. The audio amplifier circuit 213 amplifies, for example, an audio signal supplied from the audio signal processing circuit 212 to supply the amplified audio signal to the speaker 214.

The remote control receiver circuit 215 receives, for example, a remote control signal supplied from the remote control transmitter 216 to supply the remote control signal to the arithmetic circuit 204. The arithmetic circuit 204 controls, for example, respective components of the receiver-side apparatus 200 in response to the remote control signal.

[Sectional configuration of receiver-side apparatus 200]

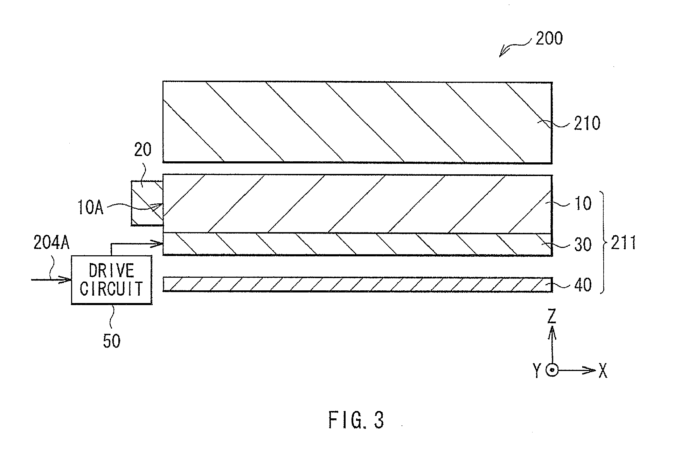

FIG. 3 illustrates an example of a sectional configuration of the receiver-side apparatus 200. It is to be noted that FIG. 3 is a schematic illustration, and dimensions and shapes in the illustration are not necessarily the same as actual dimensions and shapes. The receiver-side apparatus 200 includes the display panel 210 and the backlight 211 disposed on a back side of the display panel 210. It is to be noted that the backlight 211 corresponds to a specific example of "illumination device" in the invention.

The display panel 210 is provided to display a picture. The display panel 210 is, for example, a transmissive liquid crystal display panel (LCD) in which respective pixels are driven in response to a picture signal, and has a configuration in which a liquid crystal layer is sandwiched between a pair of transparent substrates. More specifically, the display panel 210 includes a polarization plate, a transparent substrate, pixel electrodes, an alignment film, a liquid crystal layer, an alignment film, a common electrode, a color filter, a transparent substrate, and a polarization plate (all of which are not illustrated) in order from the backlight 211 side.

The transparent substrates are configured of substrates transparent to visible light, for example, plate glass. It is to be noted that an active drive circuit (not illustrated) including TFTs (thin film transistors), wiring, and the like electrically connected to the pixel electrodes is formed on the transparent substrate on the backlight 211 side. The pixel electrodes and the common electrode are made of, for example, ITO. The pixel electrodes are arranged on the transparent substrate in a lattice, and function as electrodes for respective pixels. On the other hand, the common electrode is formed on an entire surface of the color filter, and functions as a common electrode facing the respective pixel electrodes. The alignment films are made of a polymer material such as polyimide, and perform an alignment process on a liquid crystal. The liquid crystal layer is made of, for example, a VA (Vertical Alignment) mode, TN (Twisted Nematic) mode or STN (Super Twisted Nematic) mode liquid crystal, and has a function of changing the direction of a polarizing axis of emitted light from the backlight 211 in each pixel by a voltage applied from the drive circuit (not illustrated). It is to be noted that liquid crystal alignment is changed in a stepwise manner to adjust the direction of a transmission axis of each pixel in a stepwise manner. In the color filter, color filters separating light having passed through the liquid crystal layer into, for example, three primary colors of red (R), green (G) and blue (B), or four colors such as R, G, B and white (W), respectively, are arranged corresponding to the arrangement of the pixel electrodes.

The polarization plates are optical shutters of one kind, and allow only light (polarized light) in a certain vibration direction to pass therethrough. It is to be noted that the polarization plates may be absorption polarizers absorbing light (polarized light) in a vibration direction other than a transmission axis, but the polarization plates are preferably reflective polarizers reflecting light to the backlight 211 side in terms of an improvement in luminance. The polarization plates are disposed to allow their polarizing axes to be different by 90° from each other, or be parallel to each other, thereby allowing emitted light from the backlight 211 to pass therethrough via the liquid crystal layer, or to be shielded.

The backlight 211 is an illumination device for a display capable of performing two-dimensional display and three-dimensional display. The backlight 211 illuminates, for example, the display panel 210 from a back side thereof, and includes a light guide plate 10, a light source 20 disposed on a side surface of the light guide plate 10, a light modulation element 30 and a reflective plate 40 disposed on a back side of the light guide plate 10, and a drive circuit 50 driving the light modulation element 30.

The light guide plate 10 guides light from the light source 20 disposed on the side surface of the light guide plate 10 to a top surface of the light guide plate 10. The light guide plate 10 has a shape corresponding to the display panel 210 disposed on the top surface of the light guide plate 10, for example, a rectangular parallelepiped shape surrounded by a top surface, a bottom surface, and side surfaces. It is to be noted that a side surface where light from the light source 20 enters among the side surfaces of the light guide plate 10 is hereinafter referred to as a "light incident surface 10A". In the light guide plate 10, at least one of the top surface and the bottom surface has a predetermined patterned shape, and the light guide plate 10 has a function of scattering and equalizing light incident from the light incident surface 10A. It is to be noted that in the case where a voltage applied to the backlight 211 is modulated to equalize luminance, a flat light guide plate which is not patterned may be used as the light guide plate 10. The light guide plate 10 is formed by mainly including a transparent thermoplastic resin such as a polycarbonate resin (PC) or an acrylic resin (polymethylmethacrylate (PMMA)).

The light source 20 is a linear light source, and is configured of, for example, a hot cathode fluorescent lamp (HCFL), a cold cathode fluorescent lamp (CCFL) or a plurality of LEDs (Light Emitting Diodes) linearly arranged. In the case where the light source 20 is configured of a plurality of LEDs, all of the LEDs are preferably white LEDs in terms of efficiency, a reduction in profile and uniformity. It is to be noted that the light source 20 may be configured of, for example, red LEDs, green LEDs and blue LEDs. The light source 20 may be disposed on only one side surface of the light guide plate 10 (refer to FIG. 3), or on two side surfaces, three side surfaces, or all side surfaces of the light guide plate 10.

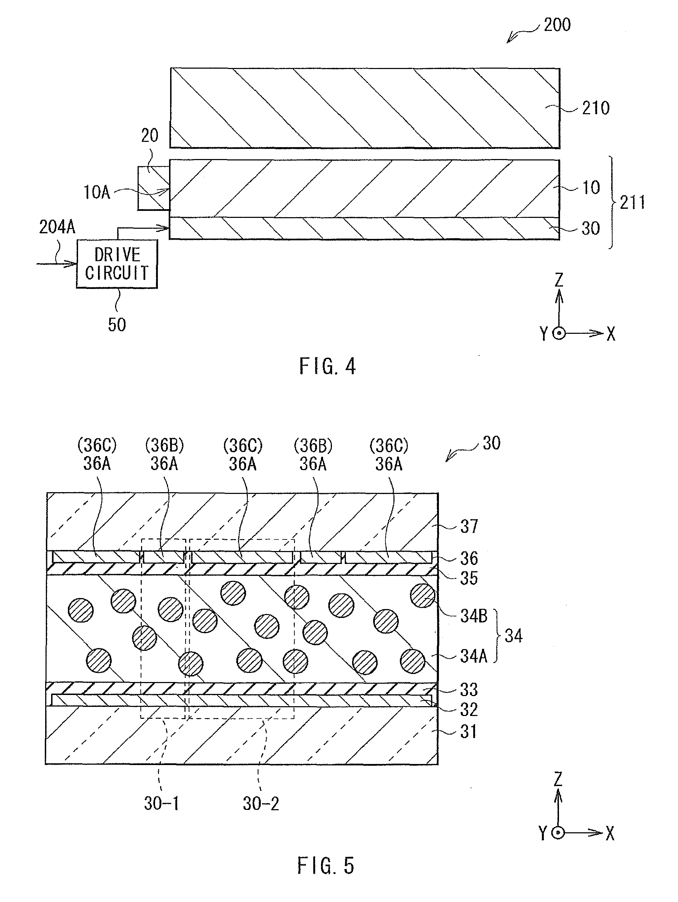

The reflective plate 40 returns light leaked from the back side of the light guide plate 10 through the light modulation element 30 to the light guide plate 10 side, and has, for example, functions such as reflection, diffusion and scattering. Therefore, emitted light from the light source 20 is allowed to be efficiently used, and the reflective plate 40 is also useful to improve front luminance. The reflective plate 40 is made of, for example, foamed PET (polyethylene terephthalate), a silver-evaporated film, a multilayer reflective film, or white PET. It is to be noted that, for example, as illustrated in FIG. 4, the reflective plate 40 may not be included, as necessary.

In the embodiment, the light modulation element 30 is in close contact with a back side (the bottom surface) of the light guide plate 10 without an air layer in between, and is bonded to the back side of the light guide plate 10 with, for example, an adhesive (not illustrated) in between. For example, as illustrated in FIG. 5, the light modulation element 30 is configured by arranging a transparent substrate 31, a lower electrode 32, an alignment film 33, a light modulation layer 34, an alignment film 35, an upper electrode 36, and a transparent substrate 37 in order from the reflective plate 40 side. It is to be noted that the lower electrode 32 corresponds to a specific example of "first electrode" in the invention, and the upper electrode 36 corresponds to a specific example of "second electrode" in the invention.

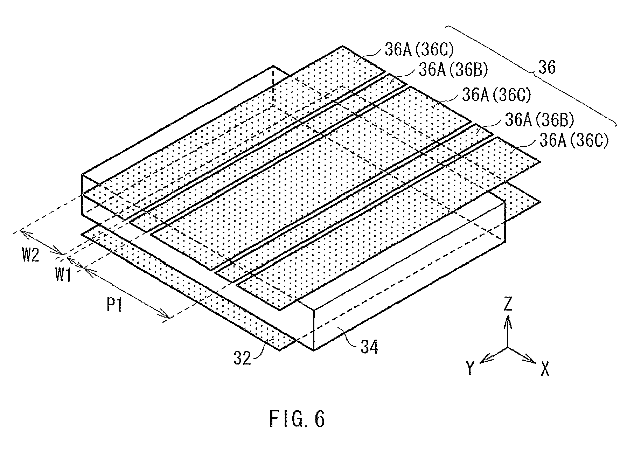

The transparent substrates 31 and 37 support the light modulation layer 34, and are typically configured of substrates transparent to visible light, for example, glass plates or plastic films. The lower electrode 32 is disposed on a surface facing the transparent substrate 37 of the transparent substrate 31, and is configured of one solid film formed on the entire surface as illustrated in a part of the light modulation element 30 in FIG. 6. Moreover, the upper electrode 36 is disposed on a surface facing the transparent substrate 31 of the transparent substrate 37, and is configured of, for example, a plurality of sub-electrodes 36A as illustrated in FIG. 6. It is to be noted that the sub-electrodes 36A correspond to specific examples of "first sub-electrodes" and "second sub-electrodes" in the invention.

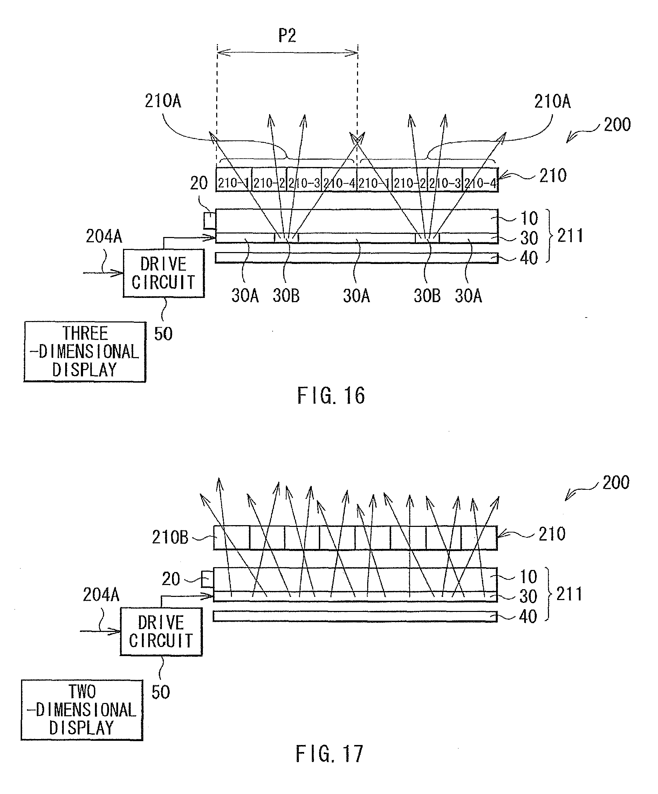

The plurality of sub-electrodes 36A each have a strip shape extending in one direction in a plane (in a direction parallel to the light incident surface 10A). It is to be noted that a sub-electrode 36B corresponds to a specific example of "first sub-electrode" in the invention, and a sub-electrode 36C corresponds to a specific example of "second sub-electrode" in the invention. A plurality of sub-electrodes 36B are used to generate linear illumination light in the case where three-dimensional display is performed in the receiver-side apparatus 200. The plurality of sub-electrodes 36B are arranged with a pitch P1 (a pitch equal to or close to a pixel pitch P2 (refer to FIG. 16)) corresponding to the pixel pitch P2 in the case where three-dimensional display is performed in the receiver-side apparatus 200. The plurality of sub-electrodes 36B and a plurality of sub-electrodes 36C are alternately arranged in an arrangement direction (a direction orthogonal to the light incident surface 10A). It is to be noted that in the case where two-dimensional display is performed in the receiver-side apparatus 200, all of sub-electrodes 36A are used to generate planar illumination light.

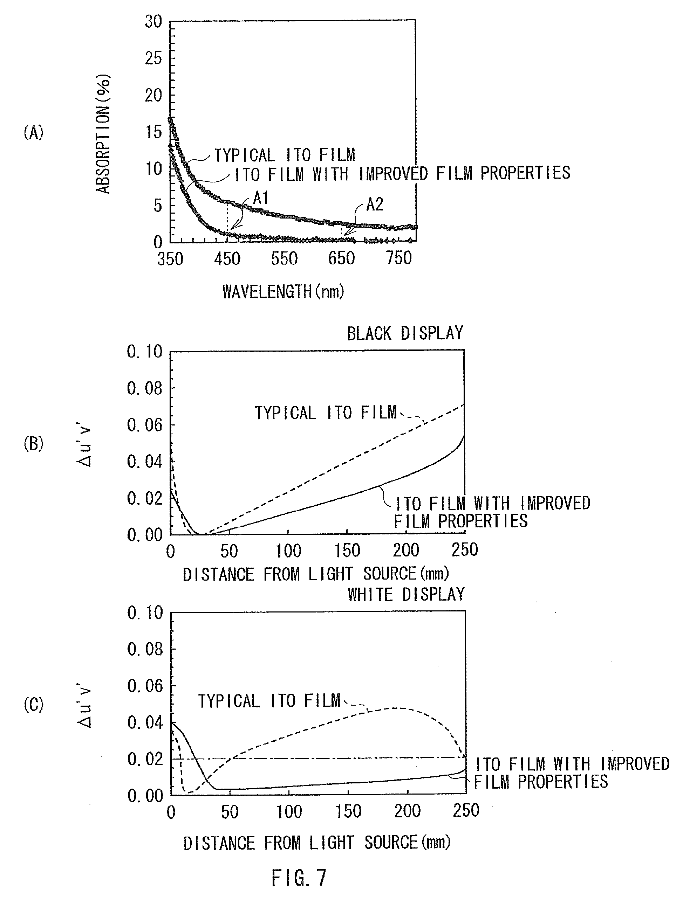

The upper electrode 36 (an electrode on a top surface of the backlight 211) or both of the lower electrode 32 and the upper electrode 36 are configured of transparent conductive films. The transparent conductive film preferably has, for example, a property represented by the following expression (refer to FIG. 7(A)). The transparent conductive film is configured of, for example, a film including indium tin oxide (ITO) (hereinafter referred to as "ITO film"). It is to be noted that the lower electrode 32 and the upper electrode 36 may be made of indium zinc oxide (IZO), a metal nanowire, a carbon nanotube, graphene, or the like.

$|A1 - A2| \leq 2.00$

A1: Maximum light absorptance (%) within a range of 450 nm to 650 nm

A2: Minimum light absorptance (%) within a range of 450 nm to 650 nm

As visible light is used as illumination light, a difference in light absorption of the transparent conductive film is preferably small within a range of 380 to 780 nm. A difference between a maximum value and a minimum value of light absorptance within a range of 380 to 780 nm is 10.00 or less, and more preferably 7.0 or less. In particular, in the case where the transparent conductive film is applied to a backlight or the like, a difference between a maximum value and a minimum value of light absorptance within a wavelength region range of a used light source is preferably 2.00 or less, and more preferably 1.00 or less. In the case where a typical LED is used as a light source, a difference between a maximum value and a minimum value of light absorptance within a range of 450 to 650 nm is preferably 2.00 or less, and more preferably 1.00 or less. It is to be noted that absorptance was measured with use of V-550 manufactured by JASCO Corporation, and reflectivity and transmittance of light incident at 5° from a direction of the normal to a substrate were measured, and a value obtained by subtracting values of the reflectivity and the transmittance from 100% was determined as absorptance.

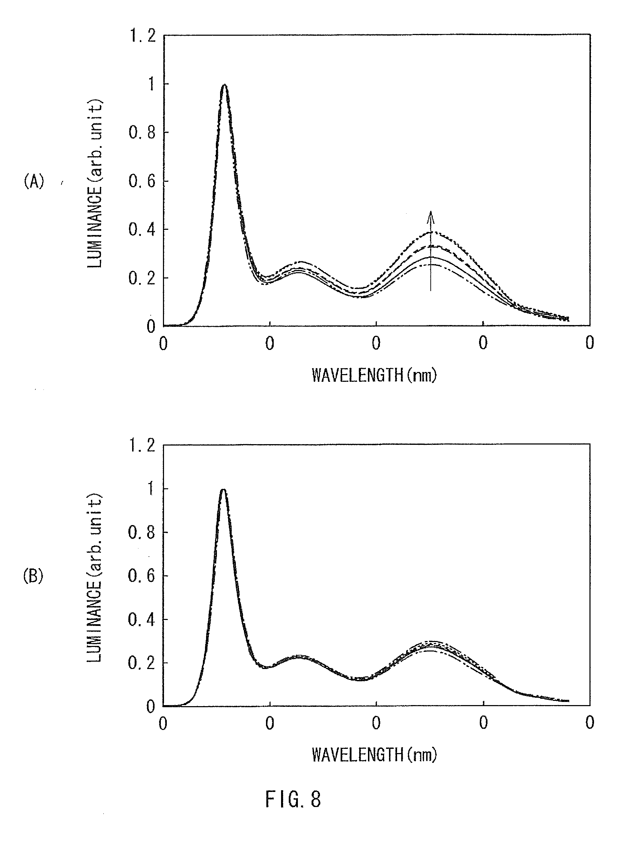

In the case where the transparent conductive film has the property represented by the above-described expression, when light emitted from the light source 20 repeatedly passes through the transparent conductive film in the light modulation element 30 in a process of propagating the light through the light guide plate 10, wavelength dependence of absorption in the transparent conductive film is suppressed. In the case where the transparent conductive film is configured of a typical ITO film, for example, as illustrated by broken lines in FIGs. 7(B) and (C) and an arrow in FIG. 8(A), a long-wavelength-side component is increased with an increase in a distance from the light source 20. On the other hand, in the case where the transparent conductive film is configured of an ITO film with improved film properties which has the above-described property represented by the above-described expression, for example, as illustrated by solid lines in FIGs. 7(B) and (C) and FIG. 8(B), a rate of change of the long-wavelength-side component with the distance from the light source 20 is reduced. It is to be noted that $\Delta u'v'$ on a vertical axis in FIGs. 7(B) and (C) is a barometer indicating that the long-wavelength-side component is increased with an increase in the value of $\Delta u'v'$.

Moreover, for example, in the case where at least one of a pair of electrodes included in the light modulation element is configured of an ITO film, a dye or a pigment absorbing light on a long wavelength side more than light on a short wavelength side is preferably included in some part (for example, at least one of the light guide plate and the light modulation element) of an optical path for guiding light. As the above-described dye or pigment, a kwon material is allowed to be used. In particular, in the case where a process of applying ultraviolet radiation is included in formation of a light modulation layer, for example, after the light modulation element is formed, the light guide plate including the dye or the pigment and the light modulation element are preferably bonded together, or a part including the dye or the pigment is preferably protected from ultraviolet radiation by an ultraviolet absorption layer to prevent damage due to ultraviolet radiation. When the above-described dye or pigment is added to some part in the optical path for guiding light in the above-described manner, light emitted from the light source repeatedly passes through the light modulation element in a process of propagating the light through the light guide plate, wavelength dependence of absorption of the light modulation element including an ITO film is suppressed.

However, the lower electrode 32 (an electrode on a bottom surface of the backlight 211) may not be made of a transparent material, and may be made of, for example, a metal. It is to be noted that in the case where the lower electrode 32 is made of a metal, the lower electrode 32 also has a function of reflecting light entering from a back side of the light guide plate 10 into the light modulation element 30 as in the case of the reflective plate 40. Therefore, in this case, for example, as illustrated in FIG. 4, the reflective plate 40 may not be included.

Parts in positions, where the lower electrode 32 and the upper electrode 36 face each other in the case where the lower electrode 32 and the upper electrode 36 are viewed from a direction of the normal to the light modulation element 30, of the light modulation element 30 configure light modulation cells 30-1 and 30-2. The light modulation cell 30-1 is a part in a position where the lower electrode 32 and the sub-electrode 36B face each other of the light modulation element 30, and the light modulation cell 30-2 is a part in a position where the lower electrode 32 and the sub-electrode 36C face each other of the light modulation element 30. The light modulation cell 30-1 and the light modulation cell 30-2 are adjacent to each other.

The light modulation cells 30-1 and 30-2 are allowed to be separately and independently driven by applying a predetermined voltage to the lower electrode 32 and the upper electrode 36 (the sub-electrode 36A), and exhibit transparency or a scattering property with respect to light from the light source 20, depending on a voltage value applied to the lower electrode 32 and the upper electrode 36 (the sub-electrode 36A). It is to be noted that transparency and the scattering property will be described in more detail when the light modulation layer 34 is described.

The alignment films 33 and 35 are provided to align, for example, a liquid crystal or a monomer used in the light modulation layer 34. Kinds of alignment films include a vertical alignment film and a horizontal alignment film, and in the embodiment, horizontal alignment films are used as the alignment films 33 and 35. Examples of the horizontal alignment films include an alignment film formed by performing a rubbing process on polyimide, polyamide imide, polyvinyl alcohol, or the like, and an alignment film provided with a groove by transfer or etching. Other examples of the horizontal alignment film include an alignment film formed by obliquely evaporating an inorganic material such as silicon oxide, a diamond-like carbon alignment film formed by ion beam irradiation, and an alignment film provided with an electrode pattern slit. In the case where plastic films are used as the transparent substrates 31 and 37, in a manufacturing process, polyamideimide capable of forming a film at a temperature of 100°C or less is preferably used for the alignment films 33 and 35, because a firing temperature after coating surfaces of the transparent substrates 31 and 37 with the alignment films 33 and 35 is preferably as low as possible.

Moreover, it is only necessary for both of vertical and horizontal alignment films to have a function of aligning a liquid crystal and a monomer, and reliability, which is necessary for a typical liquid crystal display, with respect to repeated voltage application is not necessary. It is because reliability with respect to voltage application after forming a device is determined by an interface between a resultant formed by polymerizing a monomer, and a liquid crystal. Moreover, even if the alignment film is not used, for example, when an electric field or a magnetic field is applied between the lower electrode 32 and the upper electrode 36, a liquid crystal or a monomer used in the light modulation layer 34 is allowed to be aligned. In other words, while an electric field or a magnetic field is applied between the lower electrode 32 and the upper electrode 36, the alignment state of the liquid crystal or the monomer under voltage application is allowed to be fixed by irradiation with ultraviolet rays. In the case where a voltage is used to form the alignment film, an electrode for alignment and an electrode for drive may be separately formed, or as a liquid crystal material, a dual-frequency liquid crystal allowing the sign of dielectric constant anisotropy to be reversed by a frequency may be used. Moreover, in the case where a magnetic field is used to form the alignment film, for the alignment film, a material with large magnetic susceptibility anisotropy is preferably used, and, for example, a material with a large number of benzene rings is preferably used.

The light modulation layer 34 exhibits a scattering property or transparency with respect to light from the light source 20 depending on the magnitude of an electric field. For example, as illustrated in FIG. 5, the light modulation layer 34 is a composite layer including a bulk 34A and a plurality of microparticles 34B dispersed in the bulk 34A. The bulk 34A and the microparticles 34B have optical anisotropy. It is to be noted that the bulk 34A corresponds to "second region" in the invention, and the microparticle 34B corresponds to "first region" in the invention.

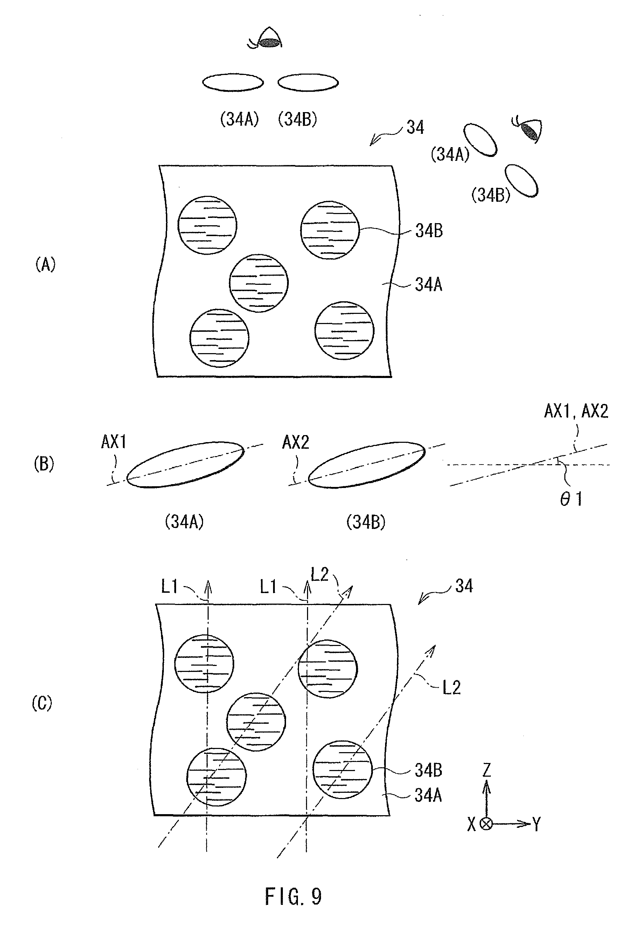

FIG. 9(A) schematically illustrates an example of an alignment state in the microparticles 34B in the case where a voltage is not applied between the lower electrode 32 and the upper electrode 36. It is to be noted that in FIG. 9(A), an alignment state in the bulk 34A is not illustrated. FIG. 9(B) illustrates an example of refractive index ellipsoids exhibiting refractive index anisotropy of the bulk 34A and the microparticles 34B in the case where a voltage is not applied between the lower electrode 32 and the upper electrode 36. The refractive index ellipsoid is a tensor ellipsoid representing a refractive index of linearly polarized light incident from various directions, and when a section of an ellipsoid from a light incident direction is observed, the refractive index is allowed to be geometrically learned. FIG. 9(C) schematically illustrates an example of a state where light L1 toward a front direction and light L2 toward an oblique direction pass through the light modulation layer 34 in the case where a voltage is not applied between the lower electrode 32 and the upper electrode 36.

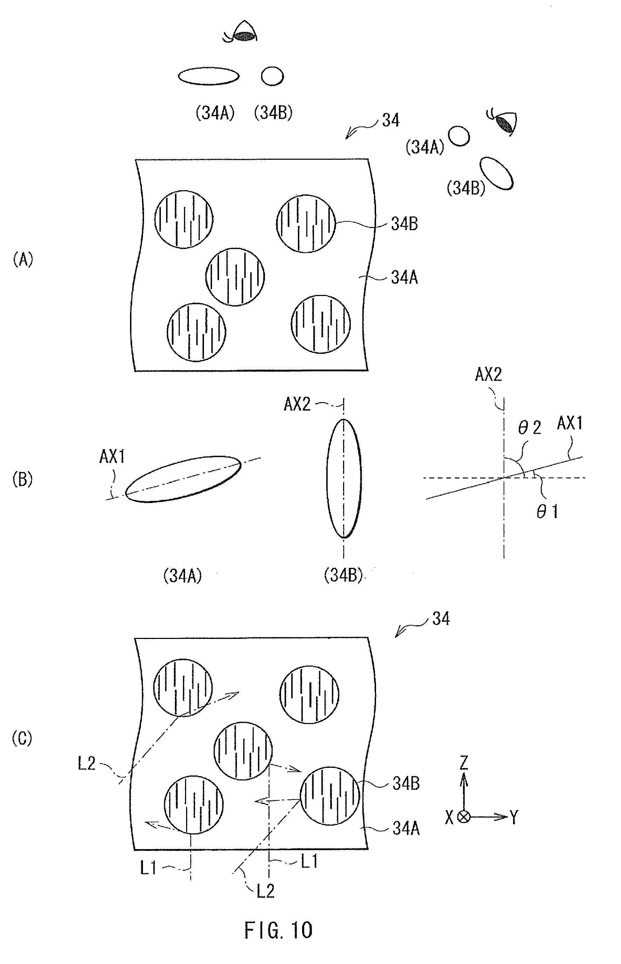

FIG. 10(A) schematically illustrates an example of an alignment state in the microparticles 34B in the case where a voltage is applied between the lower electrode 32 and the upper electrode 36. It is to be noted that in FIG. 10(A), an alignment state in the bulk 34A is not illustrated. FIG. 10(B) illustrates an example of refractive index ellipsoids exhibiting refractive index anisotropy of the bulk 34A and the microparticles 34B in the case where a voltage is applied between the lower electrode 32 and the upper electrode 36. FIG. 10(C) schematically illustrates an example of a state where the light L1 toward the front direction and the light L2 toward the oblique direction are scattered by the light modulation layer 34 in the case where a voltage is applied between the lower electrode 32 and the upper electrode 36.

For example, as illustrated in FIGs. 9(A) and (B), in the case where a voltage is not applied between the lower electrode 32 and the upper electrode 36, the bulk 34A and the microparticle 34B have a structure in which the direction of an optical axis AX1 of the bulk 34A and the direction of an optical axis AX2 of the microparticle 34B coincide with (are parallel to) each other. It is to be noted that the optical axes AX1 and AX2 each indicate a line parallel to a travel direction of a light ray allowing a refractive index to have one value irrespective of polarization direction. Moreover, it is not necessary for the directions of the optical axis AX1 and the optical axis AX2 to consistently coincide with each other, and the directions of the optical axis AX1 and the optical axis AX2 may be slightly deviated from each other due to, for example, a manufacturing error.

Moreover, in the case where a voltage is not applied between the lower electrode 32 and the upper electrode 36, for example, the microparticle 34B is structured to allow the optical axis AX2 thereof to be parallel to the light incident surface 10A of the light guide plate 10. In the case where a voltage is not applied between the lower electrode 32 and the upper electrode 36, for example, the microparticle 34B is further structured to allow the optical axis AX2 thereof to intersect with surfaces of the transparent substrates 31 and 37 at a slight angle θ1 (refer to FIG. 9(B)). It is to be noted that the angle θ1 will be described in more detail when a material forming the microparticles 34B is described.

On the other hand, for example, the bulk 34A is structured to have a fixed optical axis AX1 irrespective of whether or not a voltage is applied between the lower electrode 32 and the upper electrode 36. More specifically, for example, as illustrated in FIGs. 9(A) and (B) and FIGs. 10(A) and (B), the bulk 34A is structured to have the optical axis AX1 parallel to the light incident surface 10A of the light guide plate 10 as well as intersecting with the surfaces of the transparent substrates 31 and 37 at the predetermined angle θ1. In other words, when a voltage is not applied between the lower electrode 32 and the upper electrode 36, the optical axis AX1 of the bulk 34A is parallel to the optical axis AX2 of the microparticle 34B.

It is to be noted that it is not necessary for the optical axis AX2 to be consistently parallel to the light incident surface 10A of the light guide plate 10 as well as to consistently intersect with the surfaces of the transparent substrates 31 and 37 at the angle θ1, and the optical axis AX2 may intersect with the surfaces of the transparent substrates 31 and 37 at an angle slightly different from the angle θ1 due to, for example, a manufacturing error. Moreover, it is not necessary for the optical axes AX1 and AX2 to be consistently parallel to the light incident surface 10A of the light guide plate 10, and the optical axes AX1 and AX2 may intersect with the light incident surface 10A of the light guide plate 10 at a small angle due to, for example, a manufacturing error.

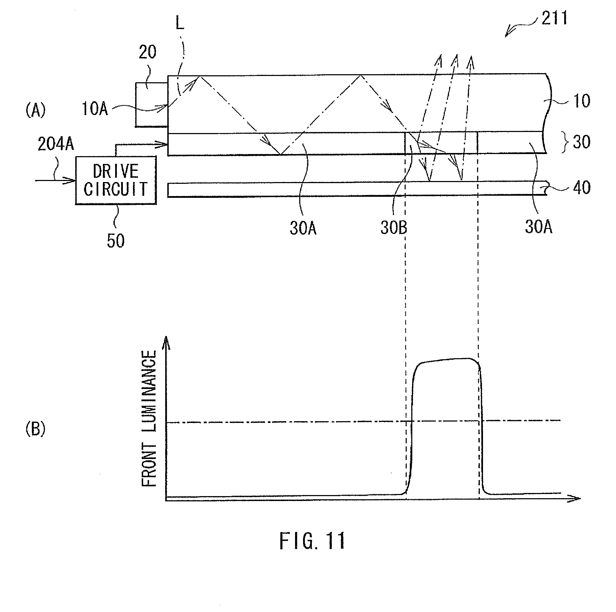

In this case, ordinary refractive indices of the bulk 34A and the microparticles 34B are preferably equal to each other, and extraordinary refractive indices of the bulk 34A and the microparticles 34B are preferably equal to each other. In this case, for example, in the case where a voltage is not applied between eth lower electrode 32 and the upper electrode 36, as illustrated in FIG. 9(A), there is little difference in refractive index in all directions including the front direction and the oblique direction, and high transparency is obtained. Therefore, for example, as illustrated in FIG. 9(C), the light L1 toward the front direction and the light L2 toward the oblique direction pass through the light modulation layer 34 without being scattered in the light modulation layer 34. As a result, for example, as illustrated in FIGs. 11(A) and (B), light L from the light source 20 (light from an oblique direction) is totally reflected by an interface of a transparent region 30A (an interface between the transparent substrate 31 or the light guide plate 10 and air), and the luminance (luminance in black display) of the transparent region 30A is decreased, compared to the case where the light modulation element 30 is not provided (indicated by an alternate long and short dash line in FIG. 11(B)).

Moreover, for example, in the case where a voltage is applied between the lower electrode 32 and the upper electrode 36, as illustrated in FIG. 10(A), the bulk 34A and the microparticle 34B are structured to allow the directions of the optical axis AX1 and the optical axis AX2 to be different from (intersect with) each other. Further, for example, in the case where a voltage is applied between the lower electrode 32 and the upper electrode 36, the microparticle 34B is structured to allow the optical axis AX2 thereof to be parallel to the light incident surface 10A of the light guide plate 10 as well as to intersect with the surfaces of the transparent substrates 31 and 37 at an angle θ2 (for example, 90˚) larger than the angle θ1. It is to be noted that the angle θ2 will be described in more detail when a material forming the microparticles 34B is described.

Therefore, in the case where a voltage is applied between the lower electrode 32 and the upper electrode 36, in the light modulation layer 34, a difference in refractive index in all directions including the front direction and the oblique direction is increased to obtain a high scattering property. For example, as illustrated in FIG. 10(C), the light L1 toward the front direction and the light L2 toward the oblique direction are thereby scattered in the light modulation layer 34. As a result, for example, as illustrated in FIG. 11(A), the light L from the light source 20 (light from the oblique direction) passes through an interface of a scattering region 30B (an interface between the transparent substrate 31 or the light guide plate 10 and air), and light having passed toward the reflective plate 40 is reflected by the reflective plate 40 to pass through the light modulation element 30. Therefore, the luminance of the scattering region 30B is extremely higher than that in the case where the light modulation element 30 is not provided (indicated by an alternate long and short dash line in FIG. 11(B)), and luminance in white display is partially increased (partial luminance enhancement) by a reduced amount of the luminance of the transparent region 30A.

It is to be noted that the ordinary refractive indices of the bulk 34A and the microparticle 34B may be slightly different from each other due to, for example, a manufacturing error, and are preferably, for example, 0.1 or less, and more preferably 0.05 or less. Moreover, the extraordinary refractive indices of the bulk 34A and the microparticle 34B may be slightly different from each other, and are preferably, for example, 0.1 or less, and more preferably 0.05 or less.

Moreover, a refractive index difference in the bulk 34A ($\Delta n_P$=extraordinary refractive index $ne_P$-ordinary refractive index $no_P$) and a refractive index difference in the microparticle 34B ($\Delta n_L$=extraordinary refractive index $ne_L$-ordinary refractive index $no_L$) are preferably as large as possible, and are preferably 0.05 or over, more preferably 0.1 or over, and still more preferably 0.15 or over. In the case where the refractive index differences in the bulk 34A and the microparticle 34B are large, the scattering power of the light modulation layer 34 is enhanced to allow light guide conditions to be easily disrupted, thereby allowing light from the light guide plate 10 to be easily extracted.

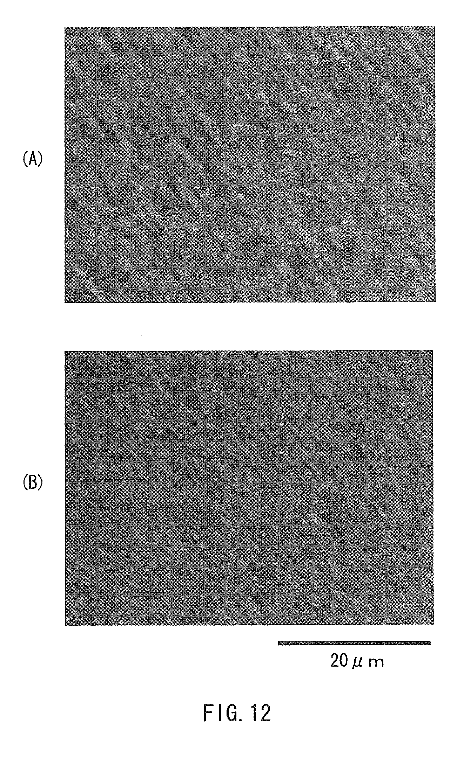

Further, the bulk 34A and the microparticle 34B have different response speeds with respect to an electric field. The bulk 34A has, for example, a streaky structure (refer to FIGs. 12(A) and (B)), a porous structure, or a rod-like structure having a response speed slower than that of the microparticle 34B. It is to be noted that FIGs. 12(A) and (B) are polarizing micrographs in the case where an electric field is applied to the light modulation element 30, and bright streaky parts in FIGs. 12(A) and (B) correspond to the above-described streaky structure. FIG. 12(A) illustrates a state of the streaky structure of the bulk 34A in the case where the weight ratio of a liquid crystal to a monomer is 95:5, and FIG. 12(B) illustrates a state of the streaky structure of the bulk 34A in the case where the weight ratio of the liquid crystal to the monomer is 90:10. The bulk 34A is formed of, for example, a polymer material obtained by polymerizing a low-molecular monomer. The bulk 34A is formed, for example, by polymerizing, by one or both of heat and light, a material (for example, a monomer) with orientation and polymerization which is aligned along the alignment direction of the microparticles 34B or the alignment directions of the alignment films 33 and 35.

For example, the streaky structure, the porous structure or the rod-like structure of the bulk 34A has a long axis in a direction parallel to the light incident surface 10A of the light guide plate 10 as well as intersecting with the surfaces of the transparent substrates 31 and 37 at the slight angle θ1. In the case where the bulk 34A has the streaky structure, an average streaky texture size in a short-axis direction is preferably within a range of 0.1 μm to 10 μm both inclusive to enhance a scattering property of guided light, and more preferably within a range of 0.2 μm to 2.0 μm both inclusive. In the case where the average streaky texture size in the short-axis direction is within a range of 0.1 μm to 10 μm both inclusive, scattering power in the light modulation element 30 is substantially equal in a visible region of 380 to 780 nm. Therefore, in a plane, an increase or a decrease in only light of a specific wavelength component does not occur; therefore, a balance in a visible region is achievable in the plane. In the case where the average streaky texture size in the short-axis direction is smaller than 0.1 μm or exceeds 10 μm, irrespective of wavelength, the scattering power of the light modulation element 30 is low, and it is difficult for the light modulation element 30 to function as a light modulation element.

Moreover, to reduce wavelength dependence of scattering, the average streaky texture size in the short-axis direction is preferably within a range of 0.5 μm to 5 μm both inclusive, and more preferably within a range of 1 μm to 3 μm. In such a case, in a process of propagating light emitted from the light source 20 through the light guide plate 10, when the light repeatedly passes through the bulk 34A in the light modulation element 30, wavelength dependence of scattering in the bulk 34 is suppressed. The streaky texture size is allowed to be observed by a polarizing microscope, a confocal microscope, an electron microscope, or the like.

On the other hand, the microparticles 34B mainly include, for example, a liquid crystal material, and have a response speed sufficiently higher than that of the bulk 34A. Examples of the liquid crystal material (liquid crystal molecules) included in the microparticles 34B include rod-like molecules. As liquid crystal molecules included in the microparticles 34B, liquid crystal molecules having positive dielectric constant anisotropy (a so-called positive type liquid crystal) are preferably used.

In this case, in the case where a voltage is not applied between the lower electrode 32 and the upper electrode 36, the long-axis directions of the liquid crystal molecules in the microparticles 34B are parallel to the optical axis AX1. At this time, the long axes of the liquid crystal molecules in the microparticles 34B are parallel to the light incident surface 10A of the light guide plate 10, and intersect with the surfaces of the transparent substrates 31 and 37 at the slight angle θ1. In other words, in the case where a voltage is not applied between the lower electrode 32 and the upper electrode 36, the liquid crystal molecules in the microparticles 34B are aligned to be tilted only at the angle θ1 in a plane parallel to the light incident surface 10A of the light guide plate 10. The angle θ1 is called a pretilt angle, and is, for example, preferably within a range of 0.1° to 30° both inclusive. The angle θ1 is more preferably within a range of 0.5° to 10° both inclusive, and still more preferably within a range of 0.7° to 2° both inclusive. When the angle θ1 is increased, scattering efficiency tends to be reduced due to the following reason. Moreover, when the angle θ1 is too small, the angle of a direction where the liquid crystal rises under voltage application varies. For example, the liquid crystal may rise in a 180°-different direction (reverse tilt). Therefore, refractive index differences in the microparticles 34B and the bulk 34A are not allowed to be effectively used; therefore, scattering efficiency tends to be reduced, and luminance tends to be reduced.

Further, in the case where a voltage is applied between the lower electrode 32 and the upper electrode 36, in the microparticles 34B, the long-axis directions of the liquid crystal molecules intersect with (or are orthogonal to) the optical axis AX1. At this time, the long axes of the liquid crystal molecules in the microparticles 34B are parallel to the light incident surface 10A of the light guide plate 10, and intersect with the surfaces of the transparent substrates 31 and 37 at the angle θ2 (for example, 90°) which is larger than the angle θ1. In other words, in the case where a voltage is applied between the lower electrode 32 and the upper electrode 36, the liquid crystal molecules in the microparticles 34B are aligned to be tilted only at the angle θ2 in a plane parallel to the light incident surface 10A of the light guide plate 10 or to rise upright at the angle θ2 (=90°).

The above-described monomer having orientation and polymerization may be a material having optical anisotropy and forming a composite material with a liquid crystal; however, a low-molecular monomer which is cured with ultraviolet radiation is preferable in the embodiment. It is preferable that in a state where no voltage is applied, directions of optical anisotropy of the liquid crystal and a resultant (a polymer material) formed by polymerizing a low-molecular monomer coincide with each other; therefore, before curing the low-molecular monomer with ultraviolet radiation, the liquid crystal and the low-molecular monomer are preferably aligned in the same direction. In the case where a liquid crystal is used as the microparticles 34B, when the liquid crystal includes rod-like molecules, the monomer material to be used preferably has a rod-like shape. As described above, a material having both of polymerization and liquid crystal properties is preferably used as a monomer material, and, for example, one or more functional groups selected from the group consisting of an acrylate group, a methacrylate group, an acryloyloxy group, a methacryloyloxy group, a vinyl ether group, and an epoxy group are preferably included as polymerizable functional groups. These functional groups are allowed to be polymerized by being irradiated with ultraviolet rays, infrared rays or electron beams, or by being heated. To suppress a reduction in the degree of alignment during irradiation with ultraviolet rays, a liquid crystal material having a polyfuncitonal group may be added. In the case where the bulk 34A has the above-described streaky structure, as the material of the bulk 34A, a bifunctional liquid crystal monomer is preferably used. Moreover, a monofunctional monomer may be added to the material of the bulk 34A to adjust a temperature at which liquid crystal properties are exhibited, or a tri- or more-functional monomer may be added to the material of the bulk 34A to improve crosslink density.

For example, the drive circuit 50 controls the magnitude of a voltage applied to a pair of electrodes (the lower electrode 32 and the upper electrode 36) of each of light modulation cells 30-1 and 30-2 to allow the optical axes AX2 of the microparticles 34B in one light modulation cell 30-1 to be parallel or substantially parallel to the optical axis AX1 of the bulk 34, as well as to allow the optical axes AX2 of the microparticles 34B in the other light modulation cell 30-2 to intersect with or be orthogonal to the optical axis AX1 of the bulk 34A. In other words, the drive circuit 50 allows, by electric field control, the direction of the optical axis AX1 of the bulk 34A and the directions of the optical axes AX2 of the microparticles 34B to coincide with (or substantially coincide with) each other or to be different from (orthogonal to) each other.

When the drive circuit 50 receives a signal indicating three-dimensional display as the control signal 204A, the drive circuit 50 allows the backlight 211 to emit a plurality of linear illumination light rays. More specifically, the drive circuit 50 applies, to a plurality of specific sub-electrodes 36B in a plurality of sub-electrodes 36A, a voltage allowing the light modulation layer 34 to exhibit the scattering property, and applies, to a plurality of sub-electrodes 36C other than the plurality of sub-electrodes 36B in the plurality of sub-electrodes 36A, a voltage allowing the light modulation layer 34 to exhibit transparency. In other words, the drive circuit 50 controls the magnitude of a voltage applied to a pair of electrodes (the lower electrode 32 and sub-electrode 36A) of each of the light modulation cells 30-1 and 30-2 to allow the optical axes AX2 of the microparticles 34B in all light modulation cells 30-1 included in the backlight 211 to intersect with the optical axis AX1 of the bulk 34A, as well as to allow the optical axes AX2 of the microparticles 34B in all light modulation cells 30-2 included in the backlight 211 to be parallel to the optical axis AX1 of the bulk 34A.

Moreover, when the drive circuit 50 receives a signal indicating two-dimensional display as the control signal 204A, the drive circuit 50 allows the backlight 211 to emit planar illumination light. More specifically, the drive circuit 50 applies, to all of the plurality of sub-electrodes 36A, a voltage allowing the light modulation layer 34 to exhibit the scattering property. In other words, the drive circuit 50 controls the magnitude of a voltage applied to a pair of electrodes (the lower electrode 32 and the sub-electrode 36A) of each of the light modulation cells 30-1 and 30-2 to allow the optical axes AX2 of the microparticles 34B in all light modulation cells 30-1 and 30-2 included in the backlight 211 to intersect with the optical axis AX1 of the bulk 34A.

It is to be noted that when the drive circuit 50 receives the signal indicating two-dimensional display as the control signal 204A as well as a signal associated with picture data, the drive circuit 50 may allow the backlight 211 to emit planar illumination light having a luminance distribution based on the picture data (for example, planar illumination light having a dark part in a plane). However, in such a case, the upper electrode 36 preferably has a layout corresponding to pixels of the display panel 210. In the case where the upper electrode 36 has a layout corresponding to the pixels of the display panel 210, based on the picture data, the drive circuit 50 applies a voltage allowing the light modulation layer 34 to exhibit the scattering property to some of the plurality of sub-electrodes 36A, and applies a voltage allowing the light modulation layer 34 to exhibit transparency to one or a plurality of sub-electrodes 36A, to which the voltage allowing the light modulation layer 34 to exhibit the scattering property is not applied, in the plurality of sub-electrodes 36A.

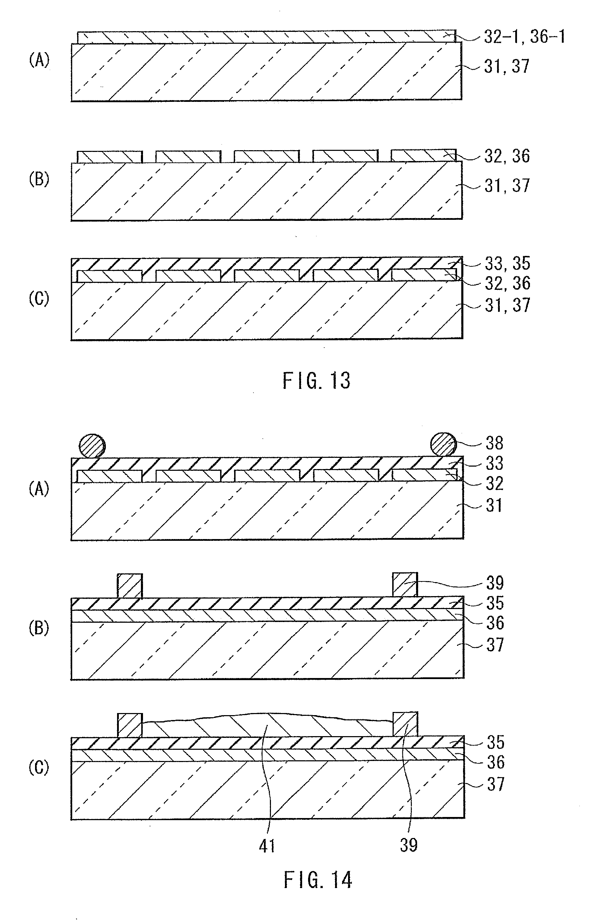

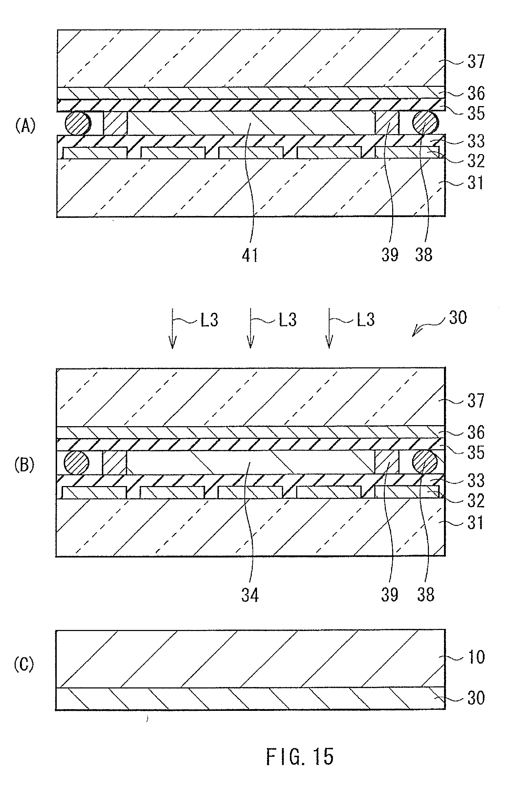

Hereinafter a method of manufacturing the backlight 211 according to the embodiment will be described referring to FIGs. 13(A) to (C) and FIGs. 15(A) to (C).

First, transparent conductive films 32-1 and 36-1 made of ITO or the like are formed on the transparent substrates 31 and 37 configured of glass substrates or plastic film substrates (refer to FIG. 13(A)), respectively. Next, resist layers are formed on entire surfaces of the transparent conductive films 32-1 and 36-1, and then electrode patterns (the lower electrode 32 and the upper electrode 36) are formed on the resist layers by patterning (refer to FIG. 13(B)).

As a patterning method, for example, a photolithography method, a laser processing method, a pattern printing method, a screen printing method, or the like may be used. Moreover, for example, patterning may be performed by performing predetermined heating after screen printing is performed with use of a "HyperEtch" material of Merck Ltd., and then rinsing the material with water. The electrode patterns are determined by a driving method and the number of divisions of partial drive. The electrode patterns are processed with a pixel pitch of a display to be used or a pitch close thereto. The processing width of an electrode depends on a processing method; however, in terms of light extraction efficiency, the width is preferably as small as possible. The processing width of the electrode is, for example, 50 $\mu$m or less, preferably 20 $\mu$m, and more preferably 5 $\mu$m or less. Moreover, the electrode patterns may be formed by performing pattern printing on ITO nanoparticles, and then firing the ITO nanoparticles.

Next, after entire surfaces are coated with the alignment films 33 and 35, the alignment films 33 and 35 are dried and fired (refer to FIG. 13(C)). In the case where as the alignment films 33 and 35, a polyimide-based material is used, NMP (N-methyl-2-pyrrolidone) is often used as a solvent; however, at this time, a temperature of approximately 200˚C is necessary under an atmosphere. It is to be noted that in this case, when plastic substrates are used as the transparent substrates 31 and 37, the alignment films 33 and 35 may be vacuum-dried and fired at 100˚C. After that, a rubbing process is performed on the alignment films 33 and 35. Therefore, the alignment films 33 and 35 function as alignment films for horizontal alignment, and a pretilt is allowed to be formed in rubbing directions of the alignment films 33 and 35.

Next, spacers 38 for forming a cell gap are sprayed on the alignment film 33 by a dry method or a wet method (refer to FIG. 14(A)). It is to be noted in the case where the light modulation cells 30-1 and 30-2 are formed by a vacuum bonding method, the spacers 38 may be mixed in a mixture to be dropped. Alternatively, columnar spacers may be formed by a photolithography method, instead of the spacers 38.

Then, the alignment film 35 is coated with a sealing agent 39 for bonding and preventing leakage of the liquid crystal in, for example, a frame shape (refer to FIG. 14(B)). A pattern of the sealing agent 39 is allowed to be formed by a dispenser method or a screen printing method.

The vacuum bonding method (a one-drop-fill method, or an ODF method) will be described below; however, it is to be noted that the light modulation cell 30-1 may also be formed by a vacuum injection method, a roll bonding method, or the like.

First, a mixture 41 of a liquid crystal and a monomer, corresponding to a volume determined by a cell gap, a cell area, or the like, is dropped uniformly on a plane (refer to FIG. 14(C)). The mixture 41 is preferably dropped with use of a linear guide precise dispenser; however, a die coater or the like may be used with use of the pattern of the sealing agent 39 as a bank.

The above-described materials may be used as the liquid crystal and the monomer, and a weight ratio of the liquid crystal to the monomer is within a range of 98:2 to 50:50, preferably within a range of 95:5 to 75:25, and more preferably within a range of 92:8 to 85:15. A drive voltage is allowed to be decreased by increasing the ratio of the liquid crystal; however, when the liquid crystal is increased too much, the liquid crystal tends to have difficulty in returning to a transparent state, such as a decline in whiteness under voltage application or a decrease in the response speed after turning the voltage off.

In addition to the liquid crystal and the monomer, a polymerization initiator may be added to the mixture 41. A monomer ratio of the polymerization initiator to be added may be adjusted within a range of 0.1 to 10 wt%, depending on an ultraviolet wavelength to be used. A polymerization inhibitor, a plasticizer, a viscosity modifier, or the like may be further added to the mixture 41, as necessary. When the monomer is a solid or gel at room temperature, a cap, a syringe, and a substrate are preferably warmed.

After the transparent substrates 31 and 37 are put in a vacuum bonding system (not illustrated), evacuation is performed to bond the transparent substrates 31 and 37 (refer to FIG. 15(A)). After that, a resultant is released to the atmosphere to uniformize the cell gap by uniform pressurization under atmospheric pressure. The cell gap may be appropriately selected based on a relationship between white luminance (whiteness) and the drive voltage; however, the cell gap is within a range of 5 to 40 $\mu$m, preferably within a range of 6 to 20 $\mu$m, and more preferably within a range of 7 to 10 $\mu$m.

After bonding, an alignment process is preferably performed as necessary (not illustrated). In the case where light leakage occurs by an insertion of a bonded cell between Crossed-Nicols polarization plates, the cell may be heated for a predetermined time or be left at room temperature to be aligned. After that, the monomer is irradiated with ultraviolet rays L3 to be polymerized, thereby forming a polymer (refer to FIG. 15(B)). The light modulation element 30 is manufactured in such a manner.

It is preferable to prevent the temperature of the cell from being changed during irradiation with ultraviolet rays. An infrared cut filter is preferably used, or an UV-LED or the like is preferably used as a light source. Ultraviolet irradiance exerts an influence on an organization structure of a composite material; therefore, the ultraviolet irradiance is preferably adjusted appropriately based on a liquid crystal material or a monomer material to be used, and a composition thereof, and the ultraviolet irradiance is preferably within a range of 0.1 to 500 mW/cm$^2$, and more preferably within a range of 0.5 to 30 mW/cm$^2$.

There is a tendency that the lower the ultraviolet irradiance is, the lower the drive voltage becomes, and preferable ultraviolet irradiance is allowed to be selected in terms of both of productivity and properties.

Then, the light modulation element 30 is bonded to the light guide plate 10. Bonding may be carried out by sticking or adhesion; however, it is preferable that the light modulation element 30 be adhered or stuck with a material having a refractive index which is as close to a refractive index of the light guide plate 10 and a refractive index of a substrate material of the light modulation element 30 as possible. Finally, a leading line (not illustrated) is attached to the bottom electrode 32 and the top electrode 36. Thus, the backlight 211 according to the embodiment is manufactured.

Although the process of forming the light modulation element 30, and finally bonding the light modulation element 30 to the light guide plate 10 is described, the transparent substrate 37 with the alignment film 35 formed thereon may be bonded in advance to the surface of the light guide plate 10 to form the backlight 211. Moreover, the backlight 211 may be formed by one of a sheet-feeding method and a roll-to-roll method.

Next, operation and effects of the backlight 211 according to the embodiment will be described below.

In the backlight 211 according to the embodiment, in three-dimensional display, a voltage is applied to a pair of electrodes (the lower electrode 32 and the sub-electrode 36A) of each of the light modulation cells 30-1 and 30-2 to allow the optical axes AX2 of the microparticles 34B in each light modulation cell 30-1 to intersect with or be orthogonal to the optical axis AX1 of the bulk 34A, and to allow the optical axes AX2 of the microparticles 34B in each light modulation cell 30-2 to be parallel to or substantially parallel to the optical axis AX1 of the bulk 34A. Therefore, in the light modulation element 30, each light modulation cell 30-1 serves as a scattering region 30B, and each light modulation cell 30-2 serves as a transmission region 30A. As a result, light emitted from the light source 20 and entering into the light guide plate 10 passes through the transmission region 30A of the light modulation element 30, and is scattered in the scattering region 30B of the light modulation element 30 (refer to FIG. 11). Light having passed through a bottom surface of the scattering region 30B in the scattered light is reflected by the reflective plate 40 to be returned to the light guide plate 10 again, and then the light is emitted from a top surface of the backlight 211. Moreover, light toward a top surface of the scattering region 30B in the scattered light passes through the light guide plate 10, and then is emitted from the top surface of the backlight 211. Thus, in three-dimensional display, light is hardly emitted from the top surface of the transparent region 30A, and light is emitted from the top surface of the scattering region 30B. Thus, for example, as illustrated in FIG. 16, a plurality of linear illumination light rays are emitted to a front direction.

Therefore, as each linear illumination light ray emitted toward the front direction enters into a back surface of the display panel 210, for example, in the case where two-dimensional picture data for three-dimensional display is generated in the picture signal processing circuit 207 to allow respective pixel rows in a pixel arrangement corresponding to linear illumination light rays to serve as three-dimensional pixels 210A, linear illumination light rays enter, at a substantially equal angle, into pixels (for example, 210-1, 210-2, 210-3 or 210-4 in FIG. 16) in the same position in respective three-dimensional pixels 210A. As a result, picture light modulated by the pixels in the same position in respective three-dimensional pixels 210A is emitted from the pixels at a predetermined angle. At this time, a viewer views different pictures having a parallax therebetween with his right and left eyes; therefore, the viewer perceives that a three-dimensional picture (a stereoscopic picture) is displayed on the display panel 210.

Moreover, in the backlight 211 according to the embodiment, in two-dimensional display, for example, a voltage is applied to a pair of electrodes (the lower electrode 32 and the sub-electrode 36A) of each of the light modulation cells 30-1 and 30-2 to allow the optical axes AX2 of the microparticles 34B in each of the light modulation cells 30-1 and 30-2 to intersect with or be orthogonal to the optical axis AX1 of the bulk 34A. Therefore, light emitted from the light source 20 and entering into the light guide plate 10 is scattered in the scattering region 30B formed in the entire light modulation element 30 (refer to FIG. 17). Light having passed through the bottom surface of the scattering region 30B in the scattered light is reflected by the reflective plate 40 to be returned to the light guide plate 10 again, and then the light is emitted from the top surface of the backlight 211. Moreover, light toward the top surface of the scattering region 30B in the scattered light passes through the light guide plate 10 to be emitted from the top surface of the backlight 211. Thus, in two-dimensional display, for example, light is emitted from the entire top surface of the light modulation element 30 to emit planar illumination light toward a front direction.

Therefore, as the planar illumination light emitted toward the front direction enters into the back surface of the display panel 210, for example, two-dimensional picture data for two-dimensional display associated with respective pixels 210B is generated in the picture signal processing circuit 207, planar illumination light enters into the respective pixels 210B at all angles, and picture light modulated by the respective pixels 210B is emitted from the respective pixels 210B. At this time, as the viewer views the same picture with both eyes, the viewer perceives that a two-dimensional picture (a planar picture) is displayed on the display panel 210.

In the embodiment, in three-dimensional display, it is not necessary to provide a parallax barrier. Moreover, even if the parallax barrier is provided on a light emission side of the backlight 211, at this time, the light modulation layer 34 emits only linear light; therefore, the proportion of linear illumination light rays emitted from the light modulation layer 34 and absorbed by the parallax barrier is extremely low. Moreover, in the embodiment, as a cylindrical lens is not necessary in three-dimensional display, there is no possibility that an issue of aberration caused by the cylindrical lens occurs.

As described above, in the embodiment, a scattering region is formed in a part of the light modulation element 30 to allow a plurality of linear illumination light rays to be emitted from the backlight 211; therefore, both of display luminance and display quality in three-dimensional display are allowed to be improved.

Next, other effects of the receiver-side apparatus 200 according to the embodiment will be described below.

Typically, the PDLC is a composite layer which is formed by mixing the liquid crystal material and an isotropic low-molecular material, and causing phase separation by irradiation with ultraviolet rays, drying of a solvent, or the like, and has microparticles of the liquid crystal material dispersed in a polymer material. In the case where a voltage is not applied, the liquid crystal material in the composite layer is aligned in random directions, and thus exhibits the scattering property, but on the other hand, in the case where a voltage is applied, the liquid crystal material is aligned in an electric field direction; therefore, in the case where the ordinary refractive index of the liquid crystal material and the refractive index of the polymer material are equal to each other, the liquid crystal material exhibits high transparency in the front direction (in a direction of the normal to the PDLC). However, in this liquid crystal material, a difference between the extraordinary refractive index of the liquid crystal material and the refractive index of the polymer material becomes pronounced in an oblique direction, and even if the liquid crystal material has transparency in the front direction, the scattering property is exhibited in the oblique direction.

Typically, the light modulation element utilizing the PDLC often has a configuration in which the PDLC is sandwiched between two glass plates with transparent conductive films formed thereon. When light is obliquely incident from the air into the light modulation element with the above-described configuration, the light incident from the oblique direction is refracted by a refractive index difference between the air and the glass plate to enter into the PDLC at a smaller angle. Therefore, large scattering does not occur in such a light modulation element. For example, when light enters from the air at an angle of 80˚, the incident angle of the light to the PDLC is reduced to approximately 40˚ by refraction at a glass interface.

However, in an edge-light system with use of a light guide plate, as light enters through the light guide plate, the light crosses the PDLC at a large angle of approximately 80˚. Accordingly, a difference between the extraordinary refractive index of the liquid crystal material and the refractive index of the polymer material is large, and light crosses the PDCL at a larger angle, thereby causing a longer optical path subjected to scattering. For example, in the case where microparticles of a liquid crystal material having an ordinary refractive index of 1.5 and an extraordinary refractive index of 1.65 are dispersed in a polymer material having a refractive index of 1.5, there is no refractive index difference in the front direction (the direction of the normal to the PDLC), but the refractive index difference is large in the oblique direction. Thus, the scattering property in the oblique direction is not allowed to be reduced, thereby causing low viewing angle characteristics. Further, in the case where an optical film such as a diffusion film is disposed on the light guide plate, oblique leak light is diffused also in the front direction by the diffusion film or the like, thereby causing an increase in light leakage in the front direction and a decrease in the modulation ratio in the front direction.

On the other hand, in the embodiment, as the bulk 34A and the microparticles 34B each include mainly an optical anisotropic material, the scattering property in an oblique direction is reduced, thereby enabling to improve transparency. For example, the bulk 34A and the microparticles 34B include mainly the optical anisotropic materials with ordinary refractive indices which are equal to each other, and extraordinary refractive indices which are also equal to each other, and in addition thereto, the directions of the optical axes thereof coincide with or substantially coincide with each other in a region where a voltage is not applied between the lower electrode 32 and the upper electrode 36. Therefore, the refractive index difference is reduced or eliminated in all directions including the front direction (a direction of the normal to the light modulation element 30) and the oblique direction, thereby obtaining high transparency. As a result, the leakage of light in a range having a large viewing angle is allowed to be reduced or substantially eliminated, and high viewing angle characteristics are achievable.

For example, when a liquid crystal having an ordinary refractive index of 1.5 and an extraordinary refractive index of 1.65, and a liquid crystal monomer having an ordinary refractive index of 1.5 and an extraordinary refractive index of 1.65 are mixed, and the liquid crystal monomer is polymerized in a state where the liquid crystal and the liquid crystal monomer are aligned by an alignment film or an electric field, the optical axis of the liquid crystal and the optical axis of a polymer formed by polymerizing the liquid crystal monomer coincide with each other. Therefore, the refractive indices coincide with each other in all directions, thereby enabling to achieve a state where transparency is high, and to further improve the viewing angle characteristics.

Moreover, in the embodiment, for example, as illustrated in FIG. 11(A) and (B), luminance in the transparent region 30A (luminance in black display) is lower, compared to an example in which the light modulation element 30 is not provided (indicated by an alternate long and short dash line in FIG. 11(B)). On the other hand, luminance in the scattering region 30B is increased significantly, compared to the example in which the light modulation element 30 is not provided (indicated by an alternate long and short dash line in FIG. 11(B)), and luminance in white display is partially increased (partial luminance enhancement) by a reduced amount of the luminance of the transparent region 30A.

The partial luminance enhancement is a technique of enhancing luminance when white display is partially performed, compared to the case where the white display is performed on an entire screen. The partial luminance enhancement is generally used in a CRT, PDP, or the like. However, in a liquid crystal display, as a backlight uniformly generates light irrespective of an image, luminance is not allowed to be enhanced partially. When an LED backlight in which a plurality of LEDs are two-dimensionally arranged is used as the backlight, some of the LEDs may be turned off. However, in such a case, there is no diffusion light from a dark region in which the LEDs are turned off; therefore, luminance becomes lower, compared to the case where all of the LEDs are turned on. Also, the luminance may be increased by increasing a current applied to some LEDs which are turned on; however, in such a case, a large current flows for a short time, thereby causing an issue in terms of load and reliability of a circuit.

On the other hand, in the embodiment, as the bulk 34A and the microparticles 34B each include mainly the optical anisotropic material, the scattering property in the oblique direction is suppressed to reduce leak light from the light guide plate in a dark state. Therefore, as light is guided from a part in a partially-dark state to a part in a partially-bright state, partial luminance enhancement is achievable without increasing electric power supplied to the backlight 211.

Moreover, in the embodiment, in a region where a voltage is not applied between the lower electrode 32 and the upper electrode 36, the optical axes AX2 of the microparticles 34B are parallel to the light incident surface 10A of the light guide plate 10 and intersect with the surfaces of the transparent substrates 31 and 37 at the slight angle θ1. In other words, the liquid crystal molecules included in the microparticles 34B are aligned to be tilted only at the angle θ1 in a plane parallel to the light incident surface 10A (i.e., to have a pretilt angle). Therefore, when a voltage is applied between the lower electrode 32 and the upper electrode 36, the liquid crystal material included in the microparticles 34B does not rise in random directions, but rises in the plane parallel to the light incident surface 10A. At this time, the optical axis AX1 of the bulk 34A and the optical axes AX2 of the microparticles 34B intersect with or are orthogonal to each other in the plane parallel to the light incident surface 10A. In this case, light vibrating perpendicularly with respect to the transparent substrate 31 in light incident from the light incident surface 10A of the light guide plate 10 exhibits a difference between the extraordinary refractive index of the microparticle 34B and the ordinary refractive index of the bulk 34A. At this time, as the difference between the extraordinary refractive index of the microparticle 34B and the ordinary refractive index of the bulk 34A is large, scattering efficiency of light vibrating perpendicularly with respect to the transparent substrate 31 is increased. On the other hand, light vibrating in parallel with the transparent substrate 31 exhibits a difference between the ordinary refractive index of the microparticle 34B and the extraordinary refractive index of the bulk 34A. At this time, as the difference between the ordinary refractive index of the microparticle 34B and the extraordinary refractive index of the bulk 34A is also large, scattering efficiency of light vibrating in parallel with the transparent substrate 31 is increased. Therefore, light propagating through a region where a voltage is applied between the lower electrode 32 and the upper electrode 36 includes a large amount of a component in an oblique direction. For example, in the case where an acrylic light guide plate is used as the light guide plate 10, light in a region where a voltage is applied between the lower electrode 32 and the upper electrode 36 propagates at an angle of 41.8˚ or over. As a result, a refractive index difference in all directions including the oblique direction is increased to obtain a high scattering property, thereby enabling to improve display luminance. Moreover, the display luminance is allowed to be further improved by the above-described partial luminance enhancement effect.

For example, in the case where the optical axis AX1 of the bulk 34A and the optical axes AX2 of the microparticles 34B are disposed perpendicular to the light incident surface 10A of the light guide plate 10 under no voltage application, and when a voltage is applied between the lower electrode 32 and the upper electrode 36, the liquid crystal material included in the microparticles 34B rises in a plane perpendicular to the light incident surface 10A, as in the above-described case, light vibrating perpendicularly with respect to the transparent substrate 31 exhibits a difference between the extraordinary refractive index of the microparticle 34B and the ordinary refractive index of the bulk 34A, but light vibrating in a direction parallel to the transparent substrate 31 exhibits a difference between the ordinary refractive index of the microparticle 34B and the ordinary refractive index of the bulk 34A. In this case, there is little or no difference between the ordinary refractive index of the microparticle 34B and the ordinary refractive index of the bulk 34A. Therefore, in light incident from the light incident surface 10A, while light vibrating perpendicularly with respect to the transparent substrate 31 exhibits a large refractive index difference as in the above-described case, light vibrating in a direction parallel to the transparent substrate 31 exhibits little or no refractive index difference. As a result, while scattering efficiency of light vibrating perpendicularly with respect to the transparent substrate 31 is high, scattering efficiency of light vibrating in parallel with the transparent substrate 31 is low or zero. Therefore, in the case where the optical axes AX1 and AX2 are disposed perpendicular to the light incident surface 10A, compared to the case where the optical axes AX1 and AX2 are disposed in parallel with the light incident surface 10A, scattering efficiency is lower, and accordingly, luminance extracted from the light guide plate 10 is lower than that in the light modulation element 30 in the embodiment.

Consequently, in the embodiment, while the leakage of light in a range where a viewing angle is large is reduced or substantially eliminated, display luminance is allowed to be improved. As a result, the modulation ratio in the front direction is allowed to be increased.

(Anisotropic diffusion)

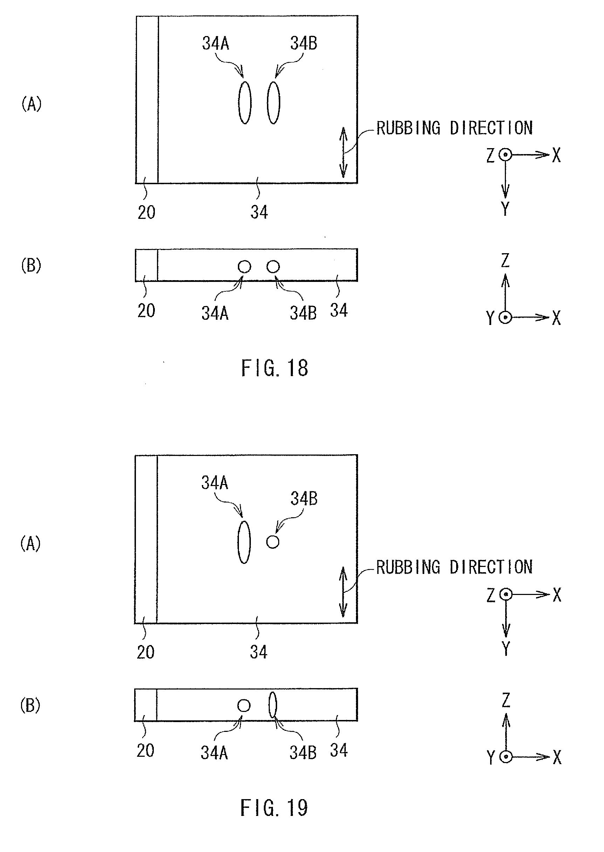

Next, anisotropic diffusion in the above-described embodiment will be described below. FIGs. 18 and 19 illustrate examples of refractive index ellipsoids of the bulk 34A and the microparticle 34B in the light modulation layer 34 in the above-described embodiment. FIG. 18 illustrates an example of refractive index ellipsoids of the bulk 34A and the microparticle 34B in the case where a voltage is not applied between the lower electrode 32 and the upper electrode 36, and FIG. 19 illustrates an example of refractive index ellipsoids of the bulk 34A and the microparticle 34B in the case where a voltage is applied between the lower electrode 32 and the upper electrode 36.

As described above, as illustrated in FIG. 18, when a voltage is not applied between the lower electrode 32 and the upper electrode 36, the optical axis of the bulk 34A and the optical axis of the microparticle 34B are aligned in a direction parallel to the light incident surface 10A of the light guide plate 10 as well as in a direction intersecting with the surfaces of the transparent substrates 31 and 37 at the angle θ1. Moreover, as described above, as illustrated in FIG. 19, when a voltage is applied between the lower electrode 32 and the upper electrode 36, the optical axis of the bulk 34A is aligned in the same direction as that when a voltage is not applied between the lower electrode 32 and the upper electrode 36. Further, the optical axis of the microparticle 34B is aligned in a direction parallel to the light incident surface 10A of the light guide plate 10 as well as intersecting with the surfaces of the transparent substrates 31 and 37 at the angle θ2 (for example, 90˚) larger than the angle θ1.

Thus, the above-described change is caused in liquid crystal molecules in the microparticles 34B in response to voltage application and no voltage application; however, in the course of the change, the bulk 34A does not respond to a voltage change, or the response speed of the bulk 34A is slow; therefore, the long-axis direction of the streaky structure of the bulk 34A is aligned in a rubbing direction (a direction parallel to the light incident surface 10A (a Y-axis direction in FIGs. 18 and 19)). Thus, when a voltage is applied between the lower electrode 32 and the upper electrode 36, light which is emitted from the light source 20 and propagates through the light modulation layer 34 propagates while exhibiting a difference between the extraordinary refractive index of the microparticle 34B and the ordinary refractive index of the bulk 34A, or a difference between the ordinary refractive index of the microparticle 34B and the extraordinary refractive index of the bulk 34A in cycles of average streaky texture size in a short-axis direction of the streaky structure of the bulk 34A. As a result, the light propagating through the light modulation layer 34 is largely scattered in a thickness direction of the light modulation layer 34, but is not scattered much in a direction parallel to the light incident surface 10A. In other words, the light modulation layer 34 exhibits anisotropy in the scattering property in the Y-axis direction and a Z-axis direction in a plane (a YZ plane) parallel to the light incident surface 10A. Thus, the light modulation layer 34 exhibits anisotropic scattering with respect to light emitted from the light source 20 and propagating through the light modulation layer 34.

In the light modulation layer 34, in consideration of the refractive index ellipsoids of the bulk 34A and the microparticles 34B, a Y-axis direction (rubbing direction)-polarized component in light propagating in the Z-axis direction in FIG. 19 has higher scattering power, compared to an X-axis direction-polarized component. In other words, the light modulation layer 34 also exhibits an anisotropic scattering property in a polarization direction with respect to light propagating in the thickness direction of the light modulation layer 34. Light polarized in the X-axis direction is scattered by a difference between the ordinary refractive index of the bulk 34A and the ordinary refractive index of the microparticles 34B, but the values thereof are substantially equal to each other; therefore, the scattering property is low. On the other hand, light polarized in the Y-axis direction is scattered by a difference between the extraordinary refractive index of the bulk 34A and the ordinary refractive index of the microparticle 34B, and the values thereof are largely different from each other; therefore, the scattering property is high.

The degree of anisotropic scattering actually exhibited by light modulation layer 34 will be hereinafter examined.

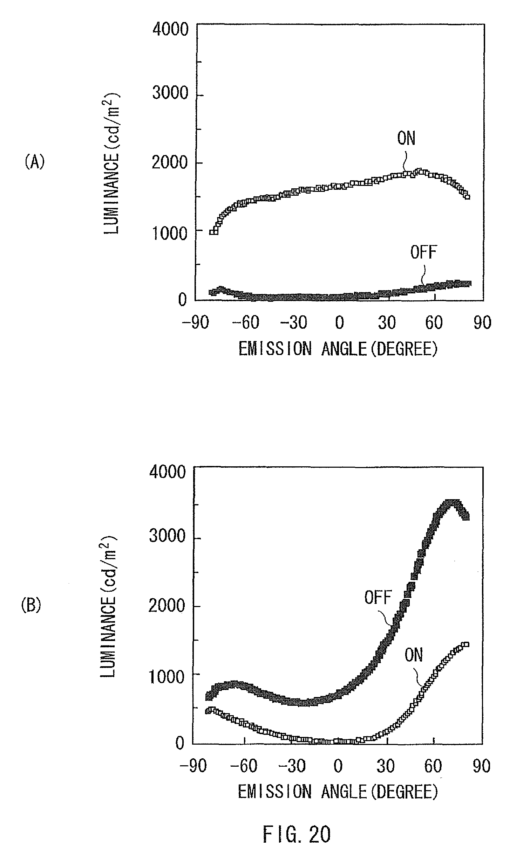

FIGs. 20(A) and (B) illustrate results of measuring emission angle characteristics of light from the light guide plate. FIG. 20(A) illustrates a result in the case where the modulation layer 34 was used, and FIG. 20(B) illustrates a result in the case where a light modulation layer exhibiting optical isotropy in a plane was used. Typically, a white reflective plate is used on a bottom surface of the light modulation layer; however, to accurately examine emission characteristics from the light modulation layer and the light guide plate, a black absorption layer was disposed on the bottom surface of the light modulation layer instead of the white reflective plate.

In the case where the light modulation layer exhibiting optical isotropy in a plane was used, light extracted from the light guide plate included a large amount of a component close to the light guide plate and a smaller amount of a component in the front direction. On the other hand, in the case where the light modulation layer 34 exhibiting optical anisotropy in a plane was used, the amount of light in the front direction was relatively large when light was extracted from the light guide plate, and such a profile was suitable for an illumination device. Moreover, in a black state, the amount of light diagonally leaked in the optically isotropic modulation layer was larger than that in an anisotropic light modulation layer; therefore, the anisotropic light modulation layer had an advantage in terms of light modulation ratio performance. Further, in the case where an optical sheet is used on the light guide plate with an air interface in between, it is considered that the amount of light lost by reflection by the air interface with the optical sheet is large; therefore, in terms of emission characteristics of light from the light guide plate, such a profile that the amount of the component in the front direction is larger is suitable. As different monomer materials and different liquid crystal materials were used for the two light modulation layers used for examination, it is difficult to compare light extraction intensity between the two light modulation layers; however, in the case where a material having the same optical property is used as the light modulation layer, when light modulation layer 34 having optical anisotropy in a plane is used, light use efficiency is allowed to be increased.

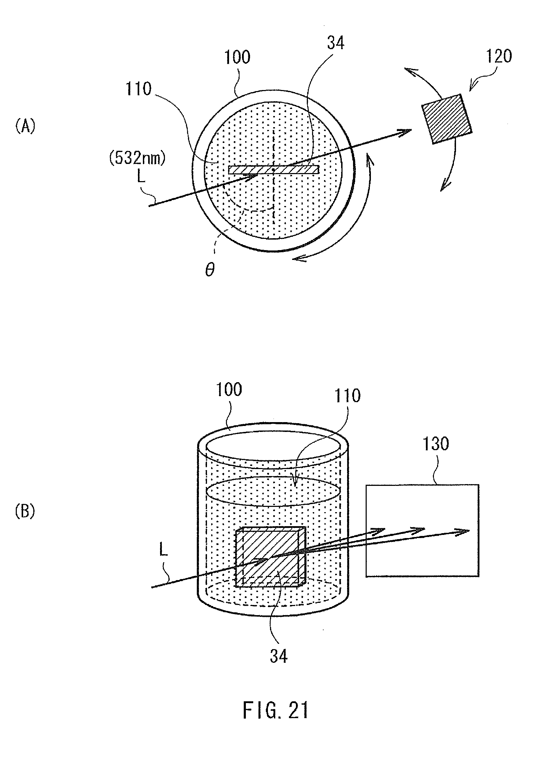

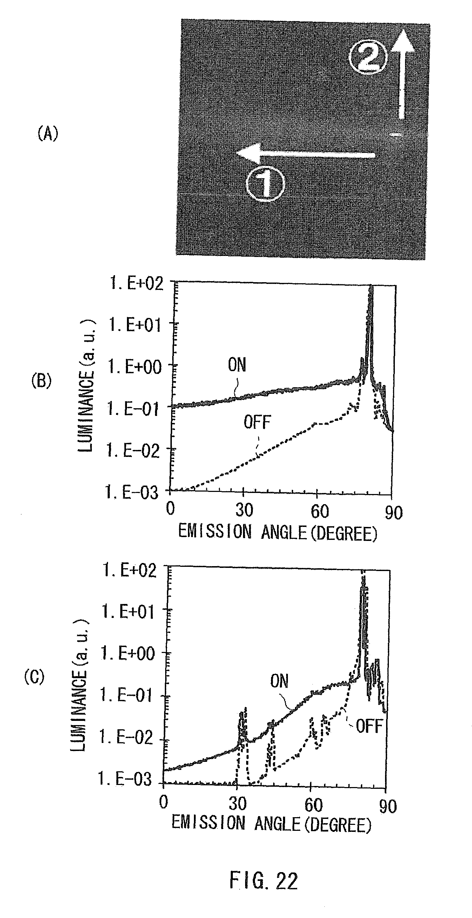

As it was found from the above-described results that in the case where the two light modulation layers were used, the respective emission angle characteristics were different from each other, scattering characteristics of the light modulation layer 34 were next measured. In a state that the light guide plate was used, total reflection by the light guide plate occurred, and scattering angle characteristics were not able to be measured; therefore, the scattering angle characteristics were measured by an apparatus illustrated in FIGs. 21(A) and (B). More specifically, a matching oil 110 and the light modulation layer 34 were put into a columnar glass container 100, and the light modulation layer 34 was irradiated with laser light L at a large incident angle θ (for example, 80˚) allowing light to be guided through a light guide plate to evaluate the scattering angle characteristics. FIG. 22(A) illustrates a state of a luminance distribution shown on a measured surface 130 when the laser light L entered into the light modulation layer 34 at the large incident angle θ (for example, 80˚). FIG. 22(B) illustrates a light intensity distribution obtained by scanning of a detector 120 around, as a central axis, an axis parallel to the optical axis AX1 (not illustrated) of the bulk 34A in the light modulation layer 34 in a plane perpendicular to the rubbing direction (corresponding to a ZX plane in FIGs. 18 and 19). The light intensity distribution at this time corresponds to a distribution in a direction indicated by (1) in FIG. 22(A). Further, FIG. 22(C) illustrates a luminance distribution obtained by scanning of the detector 120 around, as the central axis, an axis perpendicular to the optical axis AX1 (not illustrated) of the bulk 34A in the light modulation layer 34 in a plane parallel to the rubbing direction as well as parallel to the light incident surface of the light modulation layer 34 (corresponding to a ZY plane of FIGs. 18 and 19). The light intensity distribution at this time corresponds to a distribution in a direction indicated by (2) in FIG. 22(A).

From FIGs. 22(A) to (C), scattering characteristics in the plane perpendicular to the rubbing direction (corresponding to the ZX plane in FIGs. 18 and 19) were higher than those in the plane parallel to the rubbing direction (corresponding to the ZY plane in FIGs. 18 and 19), and in the front direction (at an emission angle of 0˚), intensity was different by approximately 50 times (under voltage application). In other words, it was found that, for example, as illustrated in FIGs. 22(A) to (C), the light modulation layer 34 had anisotropic scattering characteristics in which scattering in the thickness direction (Z-axis direction) of the light modulation layer 34 was larger than scattering in the rubbing direction (direction parallel to the light incident face 10A (a Y-axis direction)). Accordingly, it was found that when the liquid crystal molecules in the microparticles 34B were aligned in the thickness direction of the light modulation layer 34 in a state where the long-axis direction of the streaky structure of the bulk 34A is aligned in the rubbing direction (the direction parallel to the light incident face 10A (the Y-axis direction in FIGs. 18 and 19)), the light modulation layer 34 exhibited the above-described anisotropic scattering with respect to light emitted from the light source 20.

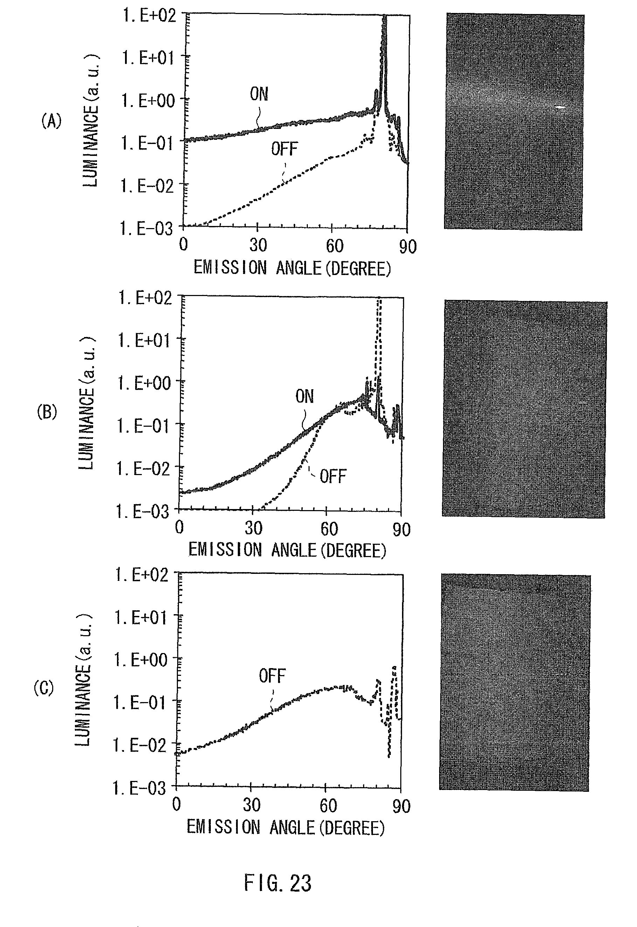

FIG. 23(A) illustrates scattering characteristics of the light modulation layer 34. FIG. 23(B) illustrates scattering characteristics of a light modulation layer in which a direction where a liquid crystal is tilted by a voltage is not determined (a pretilt of 90˚). FIG. 23(C) illustrates scattering characteristics of a normal light modulation layer which is made of an isotropic polymer and does not exhibit optical anisotropy in a plane. It was found from FIGs. 23(A) to (C) that in the light modulation layer 34, incident light was largely scattered even in the front direction, compared to the other light modulation layer, and only the light modulation layer 34 exhibited anisotropic scattering.

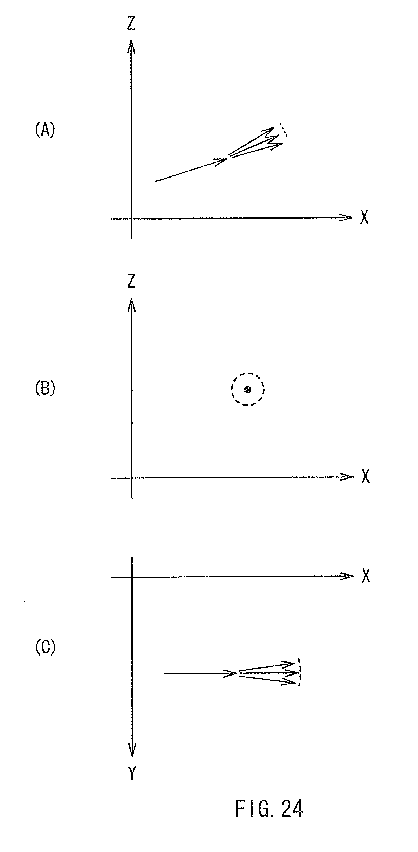

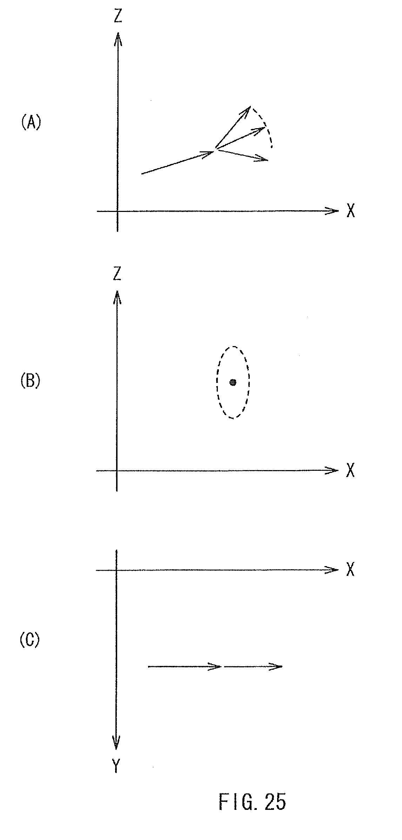

Next, description will be given of a reason why light extraction from the light guide plate is superior in the case where such anisotropic scattering is exhibited. In the case where a light modulation layer, a light guide plate, and a light source are arranged, as a light guide plate printed with a white pattern and the above-described normal light modulation layer exhibit isotropic scattering characteristics as illustrated in, for example, FIGs. 24(A) to (C), the amount of light scattered in a direction parallel to an plane of the light guide plate is large, and a probability of changing an angle until light guide conditions are disrupted is low. On the other hand, in the case where anisotropic scattering is exhibited as in the case of the light modulation layer 34, for example, as illustrated in FIGs. 25(A) to (C), incident light is largely scattered in a direction perpendicular to an in-plane direction of the light guide plate, and thus scattering occurs preferentially in a direction where light guide conditions are disrupted. Accordingly, it is considered that light extraction efficiency from the light guide plate is improved by exhibiting anisotropic scattering.

In terms of improving a scattering property of guided light, an average streaky texture size in the short-axis direction of the bulk 34A is preferably within a range of 0.1 $\mu$m to 10 $\mu$m both inclusive, ands more preferably within a range of 0.2 $\mu$m to 2.0 $\mu$m both inclusive.

(Second Embodiment)

Next, a backlight according to a second embodiment of the invention will be described below. The backlight according to the embodiment is distinguished from the backlight 211 according to the above-described embodiment by the facts that vertical alignment films are used as the alignment films 33 and 35, and a light modulation layer 64 is provided instead of the light modulation layer 34 in the above-described embodiment. Description will be given of, mainly, points different from the configuration of the above-described embodiment, and points common to the configuration of the above-descriebd embodiment will not be further described.

As described above, in this embodiment, the vertical alignment films are used as the alignment films 33 and 35. In a bulk 64A and microparticles 64B which will be described later, a pretilt aligned to be tilted from the transparent substrate 31 is formed by the vertical alignment films. The vertical alignment films may be made of a silane coupling material, polyvinyl alcohol (PVA), a polyimide-based material, a surface-active agent, or the like. For example, a rubbing process is performed after coating with these materials and drying the materials, to form a pretilt in a rubbing direction. Moreover, when plastic films are used as the transparent substrates 31 and 37, it is preferable that in a manufacturing process, a firing temperature after coating the surfaces of the transparent substrates 31 and 37 with the alignment films 33 and 35 be as low as possible; therefore, a silane coupling material allowing to use an alcohol-based solvent is preferably used as the alignment films 33 and 35. It is to be noted that a pretilt may be formed without performing a rubbing process on the alignment films 33 and 35. Examples of a method of achieving this include a method of irradiating cells formed in the alignment films 33 and 35, and irradiating the cells with ultraviolet radiation while applying, to the cells, a magnetic field or an oblique electric field caused by a slit electrode.

However, in the case where the vertical alignment films are used as the alignment films 33 and 35, as liquid crystal molecules included in the microparticles 64B, liquid crystal molecules having negative dielectric constant anisotropy (a so-called negative type liquid crystal) are preferably used.

Next, the light modulation layer 64 in the embodiment will be described below. As in the case of the above-described embodiment, the light modulation layer 64 is a composite layer including the bulk 64A and a plurality of microparticles 64B dispersed in the bulk 64A. The bulk 64A and the microparticles 64B have optical anisotropy.

FIG. 26(A) schematically illustrates an example of an alignment state in the microparticles 64B in the case where a voltage is not applied between the lower electrode 32 and the upper electrode 36. It is to be noted that in FIG. 26(A), an alignment state in the bulk 64A is not illustrated. FIG. 26(B) illustrates an example of refractive index ellipsoids exhibiting refractive index anisotropy of the bulk 64A and the microparticles 64B in the case where a voltage is not applied between the lower electrode 32 and the upper electrode 36. FIG. 26(C) schematically illustrates an example of a state where light L1 toward a front direction and light L2 toward an oblique direction pass through the light modulation layer 64 in the case where a voltage is not applied between the lower electrode 32 and the upper electrode 36.

FIG. 27(A) schematically illustrates an example of an alignment state in the microparticles 64B in the case where a voltage is applied between the lower electrode 32 and the upper electrode 36. It is to be noted that in FIG. 27(A), an alignment state in the bulk 64A is not illustrated. FIG. 27(B) illustrates an example of refractive index ellipsoids exhibiting refractive index anisotropy of the bulk 64A and the microparticles 64B. FIG. 27(C) schematically illustrate an example of a state where the light L1 toward the front direction and the light L2 toward the oblique direction are scattered by the light modulation layer 64 in the case where a voltage is applied between the lower electrode 32 and the upper electrode 36.

For example, as illustrated in FIGs. 26(A) and (B), in the case where a voltage is not applied between the lower electrode 32 and the upper electrode 36, the bulk 64A and the microparticle 64B are structured to allow the direction of an optical axis AX3 of the bulk 64A and the direction of an optical axis AX4 of the microparticle 64B to coincide with (are parallel to) each other. It is to be noted that the optical axes AX3 and AX4 each indicate a line parallel to a travel direction of a light ray allowing a refractive index to have one value irrespective of polarization direction. Moreover, it is not necessary for the directions of the optical axis AX3 and the optical axis AX4 to consistently coincide with each other, and the direction of the optical axis AX3 and the direction of the optical axis AX4 may be slightly deviated from each other due to, for example, a manufacturing error.

Moreover, in the case where a voltage is not applied between the lower electrode 32 and the upper electrode 36, for example, the microparticle 64B is structured to allow the optical axis AX4 thereof to be parallel to the light incident surface 10A of the light guide plate 10. In the case where a voltage is not applied between the lower electrode 32 and the upper electrode 36, for example, the microparticle 64B is further structured to allow the optical axis AX4 thereof to intersect with nomals to the transparent substrates 31 and 37 at a slight angle θ3 (refer to FIG. 26(B)). It is to be noted that the angle θ3 will be described in more detail when a material forming the microparticles 64B is described.

On the other hand, for example, the bulk 64A is structured to have a fixed optical axis AX4 irrespective of whether or not a voltage is applied between the lower electrode 32 and the upper electrode 36. More specifically, for example, as illustrated in FIGs. 26(A) and (B) and FIGs. 27(A) and (B), the bulk 64A is structured to have the optical axis AX3 parallel to the light incident surface 10A of the light guide plate 10 as well as intersecting with the normals to the transparent substrates 31 and 37 at the slight angle θ3. In other words, when a voltage is not applied between the lower electrode 32 and the upper electrode 36, the optical axis AX3 of the bulk 64A is parallel to the optical axis AX4 of the microparticle 64B.

It is to be noted that it is not necessary for the optical axis AX4 to be consistently parallel to the light incident surface 10A of the light guide plate 10 as well as to consistently intersect with the normals to the transparent substrates 31 and 37 at the angle θ3, and the optical axis AX4 may intersect with the normals to the transparent substrates 31 and 37 at an angle slightly different form the angle θ3 due to, for example,e a manufacturing error. Moreover, it is not necessary for the optical axes AX3 and AX4 to be consistently parallel to the light incident surface 10A of the light guide plate 10, and the optical axes AX3 and AX4 may intersect with the light incident surface 10A of the light guide plate 10 at a small angle due to, for example, a manufacturing error.

In this case, ordinary refractive indices of the bulk 64A and the microparticles 64B are preferably equal to each other, and extraordinary refractive indices of the bulk 64A and the microparticles 64B are preferably equal to each other. In this case, for example, in the case where a voltage is not applied between the lower electrode 32 and the upper electrode 36, as illustrated in FIG. 26(A), there is little difference in refractive index in all directions including the front direction and the oblique direction, and high transparency is obtained. Therefore, for example, as illustrated in FIG. 26(C), the light L1 toward the front direction and the light L2 toward the oblique direction pass through the light modulation layer 64 without being scattered in the light modulation layer 64. As a result, as in the case of the above-described embodiment, for example, as illustrated in FIGs. 11(A) and (B), the light L from the light source 20 (light from the oblique direction) is totally reflected by the interface of the transparent region 30A (the interface between the transparent substrate 31 or the light guide plate 10 and the air), and the luminance (luminance in black display) of the transparent region 30A is reduced, compared to the case where the light modulation element 30 is not provided (indicated by an alternate long and short dash line in FIG. 11(B)).

Moreover, for example, in the case where a voltage is applied between the lower electrode 32 and the upper electrode 36, as illustrated in FIG. 27(A), the bulk 64A and the microparticles 64B are structured to allow the directions of the optical axis AX3 and the optical axis AX4 to be different from (intersect with) each other. Further, for example, in the case where a voltage is applied between the lower electrode 32 and the upper electrode 36, the microparticle 64B is structured to allow the optical axis AX4 thereof to be parallel to the light incident surface 10A of the light guide plate 10 as well as to intersect with the normals to the transparent substrates 31 and 37 at an angle θ4 larger than the angle θ3, or be parallel to the surfaces of the transparent substrates 31 and 37. It is to be noted that the angle θ4 will be described in more detail when a material forming the microparticles 64B is described.

Therefore, light propagating through a region where a voltage is applied between the lower electrode 32 and the upper electrode 36 includes a large amount of a component in an oblique direction. For example, in the case where an acrylic light guide plate is used as the light guide plate 10, light in a region where a voltage is applied between the lower electrode 32 and the upper electrode 36 propagates at an angle of 41.8° or over. As a result, the light propagating through the region where the voltage is applied between the lower electrode 32 and the upper electrode 36 has a large refractive index difference, and obtains a high scattering property. Therefore, for example, as illustrated in FIG. 27(C), the light L1 toward the front direction and the light L2 toward the oblique direction are scattered in the light modulation layer 64. As a result, as in the case of the above-described embodiment, for example, as illustrated in FIGs. 11(A) and (B), the light L from the light source 20 (the light from the oblique direction) passes through the interface of the scattering region 30B (the interface between the transparent substrate 31 or the light guide plate 10 and the air), and light having passed toward the reflective plate 40 is reflected by the reflective plate 40 to pass through the light modulation element 30. Therefore, the luminance of the scattering region 30B is extremely higher than that in the case where the light modulation element 30 is not provided (indicated by an alternate long and short dash line in FIG. 11(B)), and luminance in white display is partially increased (partial luminance enhancement) by a reduced amount of the luminance of the transparent region 30A.

It is to be noted that the ordinary refractive indices of the bulk 64A and the microparticles 64B may be slightly different from each other due to, for example, a manufacturing error, and are preferably, for example, 0.1 or less, and more preferably 0.05 or less. Moreover, the extraordinary refractive indices of the bulk 64A and the microparticles 64B may be slightly different from each other due to, for example, a manufacturing error, and are preferably, for example, 0.1 or less, and more preferably 0.05 or less.

Moreover, a refractive index difference in the bulk 64A ($\Delta n_P$=extraordinary refractive index $ne_P$-ordinary refractive index $no_P$) or a refractive index difference in the microparticle 64B ($\Delta n_L$ =extraordinary refractive index $ne_L$ -ordinary refractive index $no_L$) are preferably as large as possible, and are preferably 0.05 or over, more preferably 0.1 or over, and still more preferably 0.15 or over. In the case where the refractive index differences in the bulk 64A and the microparticle 64B are large, the scattering power of the light modulation layer 64 is enhanced to allow light guide conditions to be easily disrupted, thereby allowing light from the light guide plate 10 to be easily extracted.

Further, the bulk 64A and the microparticle 64B have different response speeds with respect to an electric field. The bulk 64A has, for example, a streaky structure or a porous structure not responding to the electric field or a rod-like structure having response speed slower than that of the microparticle 64B. The bulk 64A is formed of, for example, a polymer material obtained by polymerizing a low-molecular monomer. The bulk 64A is formed, for example, by polymerizing, by one or both of heat and light, a material (for example, a monomer) with orientation and polymerization which is aligned along the alignment direction of the microparticles 64B or the alignment direction of the alignment films 33 and 35.

On the other hand, the microparticles 64B mainly include, for example, a liquid crystal material, and have a response speed sufficiently higher than that of the bulk 64A. Examples of the liquid crystal material (liquid crystal molecules) included in the microparticles 64B include rod-like molecules. As liquid crystal molecules included in the microparticles 64B, liquid crystal molecules having negative dielectric constant anisotropy (a so-called negative type liquid crystal) are used.

In this case, in the case where a voltage is not applied between the lower electrode 32 and the upper electrode 36, the long-axis directions of the liquid crystal molecules in the microparticles 64B are parallel to the optical axis AX3. At this time, the long axes of the liquid crystal molecules in the microparticles 64B are parallel to the light incident surface 10A of the light guide plate 10, and intersect with the normals to the transparent substrates 31 and 37 at the slight angle θ3. In other words, in the case where a voltage is not applied between the lower electrode 32 and the upper electrode 36, the liquid crystal molecules in the microparticles 64B are aligned to be tilted only at the angle θ3 in a plane parallel to the light incident surface 10A of the light guide plate 10. The angle θ3 is called a pretilt angle, and is, for example, preferably within a range of 0.1 to 30° both inclusive. The angle θ3 is more preferably within a range of 0.5 to 10° both inclusive, and still more preferably within a range of 0.7° to 2° both inclusive. When the angle θ3 is decreased, scattering efficiency tends to be reduced due to the following reason. Moreover, when the angle θ3 is too large (for example, approximately 90°), the angle of a direction where the liquid crystal falls under voltage application varies. For example, the liquid crystal may fall in a 180°-different direction (reverse tilt). Therefore, refractive index differences between the microparticles 64B and the bulk 64A are not allowed to be effectively used; therefore, scattering efficiency tends to be reduced, and luminance tends to be reduced.

Further, in the case where a voltage is applied between the lower electrode 32 and the upper electrode 36, in the microparticles 64B, the long-axis directions of the liquid crystal molecules intersect with (or are orthogonal to) the optical axis AX3. At this time, the long axes of the liquid crystal molecules in the microparticles 64B are parallel to the light incident surface 10A of the light guide plate 10, and intersect with the normals to the transparent substrates 31 and 37 at an angle θ4 larger than the angle θ3. In other words, in the case where a voltage is applied between the lower electrode 32 and the upper electrode 36, the liquid crystal molecules in the microparticles 64B are aligned to be tilted only at the angle 84 in a plane parallel to the light incident surface 10A of the light guide plate 10 or to fall at the angle 84 (=90°).

The above-described monomer having orientation and polymerization may be a material having optical anisotropy and forming a composite material with a liquid crystal; however, a low-molecular monomer which is cured with ultraviolet radiation is preferable in this embodiment. It is preferable that in a state where no voltage is applied, directions of optical anisotropy of the liquid crystal and a resultant (a polymer material) formed by polymerizing a low-molecular monomer coincide with each other; therefore, before curing the low-molecular monomer with ultraviolet radiation, the liquid crystal and the low-molecular monomer are preferably aligned in the same direction. In the case where the liquid crystal is used as the microparticles 64B, when the liquid crystal includes rod-like molecules, the monomer material to be used preferably has a rod-like shape. As described above, a material having both of polymerization and liquid crystal properties is preferably used as a monomer material, and, for example, one or more functional groups selected from the group consisting of an acrylate group, a methacrylate group, an acryloyloxy group, a methacryloyloxy group, a vinyl ether group, and an epoxy group are preferably included as polymerizable functional groups. These functional groups are allowed to be polymerized by being irradiated with ultraviolet rays, infrared rays or electron beams, or by being heated. To suppress a reduction in the degree of alignment during irradiation with ultraviolet rays, a liquid crystal material having a polyfuncitonal group may be added. In the case where the bulk 64A has the above-described streaky structure, as the material of the bulk 64A, a bifunctional liquid crystal monomer is preferably used. Moreover, a monofunctional monomer may be added to the material of the bulk 64A to adjust a temperature at which liquid crystal properties are exhibited, or a tri- or more-functional monomer may be added to the material of the bulk 64A to improve crosslink density.

Next, operation and effects of the backlight 211 according to the embodiment will be described below.

In the backlight 211 according to the embodiment, in three-dimensional display, a voltage is applied to a pair of electrodes (the lower electrode 32 and the sub-electrode 36A) of each of the light modulation cells 30-1 and 30-2 to allow the optical axes AX4 of the microparticles 64B in each light modulation cell 30-1 to intersect with or be orthogonal to the optical axis AX3 of the bulk 64A, and to allow the optical axes AX4 of the microparticles 64B in each light modulation cell 30-2 to be parallel to or substantially parallel to the optical axis AX3 of the bulk 64A. Therefore, light emitted from the light source 20 and entering into the light guide plate 10 passes through the transmission region 30A, where the optical axis AX3 and the optical axes AX4 are parallel to or substantially parallel to each other, of the light modulation element 30 (refer to FIG. 11). On the other hand, light emitted from the light source 20 and entering into the light guide plate 10 is scattered in the scattering region 30B, where the optical axis AX3 and the optical axes AX4 intersect with or are orthogonal to each other, of the light modulation element 30 (refer to FIG. 11). Light having passed through a bottom surface of the scattering region 30B in the scattered light is reflected by the reflective plate 40 to be returned to the light guide plate 10 again, and then the light is emitted from a top surface of the backlight 211. Moreover, light toward a top surface of the scattering region 30B in the scattered light passes through the light guide plate 10, and then is emitted from the top surface of the backlight 211. Thus, in three-dimensional display, light is hardly emitted from the top surface of the transparent region 30A, and light is emitted from the top surface of the scattering region 30B. Thus, for example, as illustrated in FIG. 16, a plurality of linear illumination light rays are emitted to a front direction.

Therefore, as each linear illumination light ray emitted toward the front direction enters into a back surface of the display panel 210, for example, in the case where two-dimensional picture data for three-dimensional display is generated in the picture signal processing circuit 207 to allow respective pixel rows in a pixel arrangement corresponding to linear illumination light rays to serve as three-dimensional pixels 210A, linear illumination light rays enter, at a substantially equal angle, into pixels (for example, 210-1, 210-2, 210-3 or 210-4 in FIG. 16) in the same position in respective three-dimensional pixels 210A. As a result, picture light modulated by the pixels in the same position in respective three-dimensional pixels 210A is emitted from the pixels at a predetermined angle. At this time, a viewer views different pictures having a parallax therebetween with his right and left eyes; therefore, the viewer perceives that a three-dimensional picture (a stereoscopic picture) is displayed on the display panel 210.

Moreover, in the backlight 211 according to the embodiment, in two-dimensional display, for example, a voltage is applied to a pair of electrodes (the lower electrode 32 and the sub-electrode 36A) of each of the light modulation cells 30-1 and 30-2 to allow the optical axes AX4 of the microparticles 64B in each of the light modulation cells 30-1 and 30-2 to intersect with or be orthogonal to the optical axis AX3 of the bulk 64A. Therefore, light emitted from the light source 20 and entering into the light guide plate 10 is scattered in the scattering region 30B formed in the entire light modulation element 30 (refer to FIG. 17). Light having passed through the bottom surface of the scattering region 30B in the scattered light is reflected by the reflective plate 40 to be returned to the light guide plate 10 again, and then the light is emitted from the top surface of the backlight 211. Moreover, light toward the top surface of the scattering region 30B in the scattered light passes through the light guide plate 10 to be emitted from the top surface of the backlight 211. Thus, in two-dimensional display, for example, light is emitted from the entire top surface of the light modulation element 30 to emit planar illumination light toward a front direction.

Therefore, as the planar illumination light emitted toward the front direction enters into the back surface of the display panel 210, for example, when two-dimensional picture data for two-dimensional display associated with respective pixels 210B is generated in the picture signal processing circuit 207, planar illumination light enters into the respective pixels 210B at all angles, and picture light modulated by the respective pixels 210B is emitted from the respective pixels 210B. At this time, as the viewer views the same picture with both eyes, the viewer perceives that a two-dimensional picture (a planar picture) is displayed on the display panel 210.

Also in this embodiment, in three-dimensional display, it is not necessary to provide a parallax barrier. Moreover, even if the parallax barrier is provided on a light emission side of the backlight 211, at this time, the light modulation layer 64 emits only linear light; therefore, the proportion of linear illumination light rays emitted from the light modulation layer 64 and absorbed by the parallax barrier is extremely low. Moreover, in the embodiment, as a cylindrical lens is not necessary in three-dimensional display, there is no possibility that an issue of aberration caused by the cylindrical lens occurs.

As described above, in the embodiment, a scattering region is formed in a part of the light modulation element 30 to allow a plurality of linear illumination light rays to be emitted from the backlight 211; therefore, both of display luminance and display quality in three-dimensional display are allowed to be improved.

In the embodiment, as the bulk 64A and the microparticles 64B each include mainly an optical anisotropic material, the scattering property in an oblique direction is reduced, thereby enabling to improve transparency. For example, the bulk 64A and the microparticles 64B mainly include the optical anisotropic materials with ordinary refractive indices which are equal to each other, and extraordinary refractive indices which are also equal to each other, and in addition thereto, the directions of the optical axes thereof coincide with or substantially coincide with each other in a region where a voltage is not applied between the lower electrode 32 and the upper electrode 36. Therefore, the refractive index difference is reduced or eliminated in all directions including the front direction (a direction of the normal to the light modulation element 30) and the oblique direction, thereby obtaining high transparency. As a result, the leakage of light in a range having a large viewing angle is allowed to be reduced or substantially eliminated, and high viewing angle characteristics are achievable.

For example, when a liquid crystal having an ordinary refractive index of 1.5 and an extraordinary refractive index of 1.65, and a liquid crystal monomer having an ordinary refractive index of 1.5 and an extraordinary refractive index of 1.65 are mixed, and the liquid crystal monomer is polymerized in a state where the liquid crystal and the liquid crystal monomer are aligned by an alignment film or by an electric field, the optical axis of the liquid crystal and the optical axis of a polymer formed by polymerizing the liquid crystal monomer coincide with each other. Therefore, the refractive indices coincide with each other in all directions, thereby enabling to achieve a state where transparency is high, and to further improve the viewing angle characteristics.

Moreover, in the embodiment, as illustrated in FIG. 11(A) and (B), luminance in the transparent region 30A (luminance in black display) is lower, compared to an example where the light modulation element 30 is not provided (indicated by an alternate long and short dash line in FIG. 11(B)). On the other hand, luminance in the scattering region 30B is increased significantly, compared to the example in which the light modulation element 30 is not provided (indicated by an alternate long and short dash line in FIG. 11(B)), and luminance in white display is partially increased (partial luminance enhancement) by a reduced amount of the luminance in the transparent region 30A. It is because as the bulk 64A and the microparticles 64B each include mainly the optical anisotropic material, the scattering property in the oblique direction is suppressed to reduce leak light from the light guide plate in a dark state. Therefore, as the light is guided from a part in a partially-dark state to a part in a partially-bright state, partial luminance enhancement is achievable without increasing electric power supplied to the backlight.

Moreover, in the embodiment, in a region where a voltage is not applied between the lower electrode 32 and the upper electrode 36, the optical axes AX4 of the microparticles 64B are parallel to the light incident surface 10A of the light guide plate 10 and intersect with the normals to the transparent substrates 31 and 37 at the slight angle 83. In other words, the liquid crystal molecules included in the microparticles 64B are aligned to be tilted only at the angle θ3 in a plane parallel to the light incident surface 10A (i.e., to have a pretilt angle). Therefore, when a voltage is applied between the lower electrode 32 and the upper electrode 36, the liquid crystal material included in the microparticles 64B does not fall in random directions, but falls in the plane parallel to the light incident surface 10A. At this time, the optical axis AX3 of the bulk 64A and the optical axes AX4 of the microparticles 64B intersect with or are orthogonal to each other in the plane parallel to the light incident surface 10A. In this case, light vibrating perpendicularly with respect to the transparent substrate 31 in light incident from the light incident surface 10A of the light guide plate 10 exhibits a difference between the ordinary refractive index of the microparticle 64B and the extraordinary refractive index of the bulk 64A. At this time, as the difference between the ordinary refractive index of the microparticle 64B and the extraordinary refractive index of the bulk 64A is large, scattering efficiency of light vibrating perpendicularly with respect to the transparent substrate 31 is increased. On the other hand, light vibrating in parallel with the transparent substrate 31 exhibits a difference between the extraordinary refractive index of the microparticle 64B and the ordinary refractive index of the bulk 64A. At this time, as the difference between the extraordinary refractive index of the microparticle 64B and the ordinary refractive index of the bulk 64A is also large, scattering efficiency of light vibrating in parallel with the transparent substrate 31 is increased. Therefore, light propagating through a region where a voltage is applied between the lower electrode 32 and the upper electrode 36 includes a large amount of a component in an oblique direction. For example, in the case where an acrylic light guide plate is used as the light guide plate 10, light in a region where a voltage is applied between the lower electrode 32 and the upper electrode 36 propagates at an angle of 41.8° or over. As a result, a refractive index difference is increased to obtain a high scattering property, thereby enabling to improve display luminance. Moreover, the display luminance is allowed to be further improved by the above-described partial luminance enhancement effect.

For example, in the case where the optical axis AX3 of the bulk 64A and the optical axes AX4 of the microparticles 64B are disposed perpendicular to the light incident surface 10A of the light guide plate 10 under no voltage application, and when a voltage is applied between the lower electrode 32 and the upper electrode 36, the liquid crystal material included in the microparticles 64B falls in a plane perpendicular to the light incident surface 10A, as in the above-described case, light vibrating perpendicularly with respect to the transparent substrate 31 exhibits a difference between the ordinary refractive index of the microparticle 64B and the extraordinary refractive index of the bulk 64A, but light vibrating in a direction parallel to the transparent substrate 31 exhibits a difference between the ordinary refractive index of the microparticle 64B and the ordinary refractive index of the bulk 64A. In this case, there is little or no difference between the ordinary refractive index of the microparticle 64B and the ordinary refractive index of the bulk 64A. Therefore, in light incident from the light incident surface 10A, while light vibrating perpendicularly with respect to the transparent substrate 31 exhibits a large refractive index difference as in the above-described case, light vibrating in a direction parallel to the transparent substrate 31 exhibits little or no refractive index difference. As a result, while scattering efficiency of light vibrating perpendicularly with respect to the transparent substrate 31 is high, scattering efficiency of light vibrating in parallel with the transparent substrate 31 is low or zero. Therefore, in the case where the optical axes AX3 and AX4 are disposed perpendicular to the light incident surface 10A, compared to the case where the optical axes AX3 and AX4 are disposed in parallel with the light incident surface 10A, scattering efficiency is lower, and accordingly, luminance extracted from the light guide plate 10 is lower than that in the light modulation element 30 in the embodiment.

Moreover, in the case where the pretilt is not formed, or in the case where the pretilt angle is substantially approximately 90˚, the liquid crystal falls in random directions; therefore, the refractive index difference is equal to an average of a refractive index difference in the case where the optical axis AX3 of the bulk 64A and the optical axes AX4 of the microparticles 64B are parallel to the light incident surface of the light guide plate 10, and a refractive index difference in the case where the optical axis AX3 of the bulk 64A and the optical axes AX4 of the microparticles 64B are perpendicular to the light incident surface 10A of the light guide plate 10. Therefore, also in these cases, compared to the case where the optical axis AX3 of the bulk 64A and the optical axes AX4 of the microparticles 64B are parallel to the light incident surface 10A of the light guide plate 10, extracted luminance is lower.

Consequently, in the embodiment, while the leakage of light in a range having a large viewing angle is reduced or substantially eliminated, display luminance is allowed to be improved. As a result, a modulation ratio in the front direction is allowed to be increased.

(Modification Examples)

[First Modification Example]

In the above-described respective embodiments, the light modulation element 30 is in close contact with and is bonded to the back side (the bottom surface) of the light guide plate 10 without an air layer in between; however, for example, as illustrated in FIG. 28, the light modulation element 30 may be in close contact with and bonded to the top surface of the light guide plate 10 without an air layer in between. Moreover, for example, as illustrated in FIG. 29, the light modulation element 30 may be disposed in the light guide plate 10. However, also in this case, it is necessary for the light modulation element 30 to be in close contact with and bonded to the light guide plate 10 without an air layer in between.

[Second Modification Example]

Moreover, in the above-described respective embodiments, no component is specifically disposed on the light guide plate 10; however, for example, as illustrated in FIG. 30, an optical sheet 60 (for example, a diffusion plate, a diffusion sheet, a lens film, a polarization splitter sheet, or the like) may be provided. In such a case, some of light emitted from the light guide plate 10 in an oblique direction rises in the front direction; therefore, a modulation ratio is allowed to be effectively improved.

[Third Modification Example]

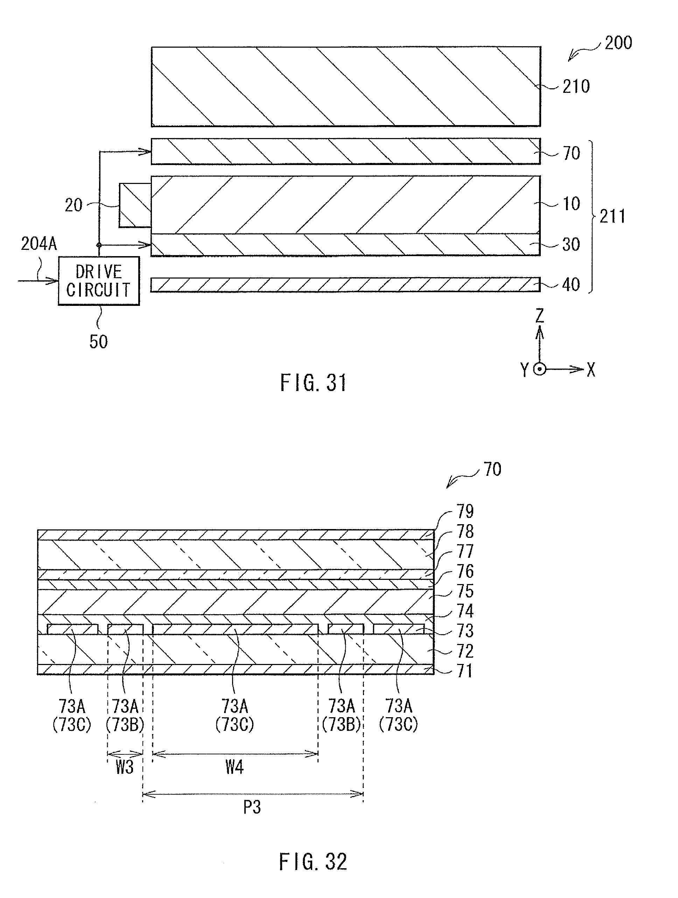

Further, in the above-described respective embodiments, for example, as illustrated in FIG. 31, a parallax barrier 70 may be disposed on a light emission side of the backlight 211. In the case where three-dimensional display is performed, the parallax barrier 70 limits a light emission region of the backlight 211 to a region facing a plurality of sub-electrodes 36B or a region corresponding thereto, to shield noise light which may be emitted from a region adjacent to the scattering region 30B (for example, an end of the transmission region 30A). Moreover, in the case where two-dimensional display is performed, the parallax barrier 70 expands the light emission region of the backlight 211 to a region facing a region where the lower electrode 32 and the upper electrode 36 face each other, or a region corresponding thereto, to allow light emitted from the light modulation element 30 to pass therethrough. It is to be noted that the parallax barrier 70 corresponds to a specific example of "light transmission region control section" in the invention.

For example, as illustrated in FIG. 32, the parallax barrier 70 includes a polarization plate 71, a transparent substrate 72, a transparent electrode 73, an alignment film 74, a liquid crystal layer 75, an alignment film 76, a transparent electrode 77, a transparent substrate 78, and a polarization plate 79 in order from the light guide plate 10 side.

The transparent substrates 72 and 78 are configured of substrates transparent to visible light, for example, plate glass. It is to be noted that an active drive circuit (not illustrated) including TFTs, wiring, and the like electrically connected to the transparent electrode 73 is formed on the transparent substrate on the light guide plate 10 side. The transparent electrodes 73 and 77 are made of, for example, ITO. For example, as illustrated in FIG. 32, the transparent electrode 73 is configured of a plurality of sub-electrodes 73A. The plurality of sub-electrodes 73A are formed on the transparent substrate 72.

The plurality of sub-electrodes 73A each have a strip shape extending in one direction in a plane (in a direction parallel to the light incident surface 10A). A width W3 of each of a plurality of specific sub-electrodes 73B in the plurality of sub-electrodes 73A is smaller than a width W4 of each of a plurality of sub-electrodes 73C other than the plurality of sub-electrodes 73B in the plurality of sub-electrodes 73A. When three-dimensional display is performed in the receiver-side apparatus 200, the plurality of sub-electrodes 73B are used to allow linear illumination light to pass therethrough or to be shielded. The plurality of sub-electrodes 73B are arranged with a pitch P3 (equal to or close to the pixel pitch P2 (refer to FIG. 16)) corresponding to the pixel pitch P2 in the case where three-dimensional display is performed in the receiver-side apparatus 200. The plurality of sub-electrodes 73B and the plurality of sub-electrodes 73C are alternately arranged in an arrangement direction (a direction orthogonal to the light incident surface 10A). It is to be noted that when two-dimensional display is performed in the receiver-side apparatus 200, all of the sub-electrodes 73A are used to generate planar illumination light.

The transparent electrode 77 is formed on an entire surface of the transparent substrate 78, and functions as a common electrode facing the respective sub-electrodes 73A. The alignment films 74 and 76 are made of a polymer material such as polyimide, and perform an alignment process on a liquid crystal. The liquid crystal layer 75 is made of, for example, a VA mode, TN mode, or STN mode liquid crystal, and has a function of changing the direction of a polarizing axis of emitted light from the light guide plate 10 in each of regions facing the sub-electrodes 73A by a voltage applied from the drive circuit 50. The polarization plates 71 and 79 are optical shutters of one kind, and allow only light (polarized light) in a certain vibration direction to pass therethrough. It is to be noted that the polarization plates 71 and 79 may be absorption polarizers absorbing light (polarized light) in a vibration direction other than a transmission axis, or reflective polarizers reflecting light to the light guide plate 10 side. The polarization plates 71 and 79 are disposed to allow their polarizing axes to be different by 90° from each other, or be parallel to each other, thereby allowing light from the light guide plate 10 to pass therethrough via the liquid crystal layer 75, or to be shielded.

When the drive circuit 50 receives a signal indicating three-dimensional display as the control signal 204A, the drive circuit 50 allows the parallax barrier 70 to function as a slit-like transmission section. More specifically, the drive circuit 50 applies, to the plurality of specific sub-electrodes 73B in the plurality of sub-electrodes 73A, a voltage allowing the parallax barrier 70 to exhibit transparency, as well as applies, to the plurality of sub-electrodes 73C other than the plurality of sub-electrodes 73B in the plurality of sub-electrodes 73A, a voltage allowing the parallax barrier 70 to exhibit a light-shielding effect.

Moreover, when the drive circuit 50 receives a signal indicating two-dimensional display as the control signal 204A, the drive circuit 50 allows the entire parallax barrier 70 to function as a light transmission section. More specifically, the drive circuit 50 applies, to all of the sub-electrodes 73A, a voltage allowing the parallax barrier 70 to exhibit transparency.

In this modification example, the parallax barrier 70 is disposed on the light emission side of the backlight 211; therefore, when a plurality of linear illumination light rays are emitted from the light modulation element 30, noise light which may be emitted from a region adjacent to the scattering region 30B is allowed to be shielded. Therefore, in three-dimensional display, light entering at an angle different from the incident angle of each linear illumination light ray to each of the pixels 210-1, 210-2, 210-3 and 210-4 (refer to FIG. 16) is allowed to be reduced. As a result, a clear three-dimensional picture is allowed to be obtained.

[Fourth Modification Example]

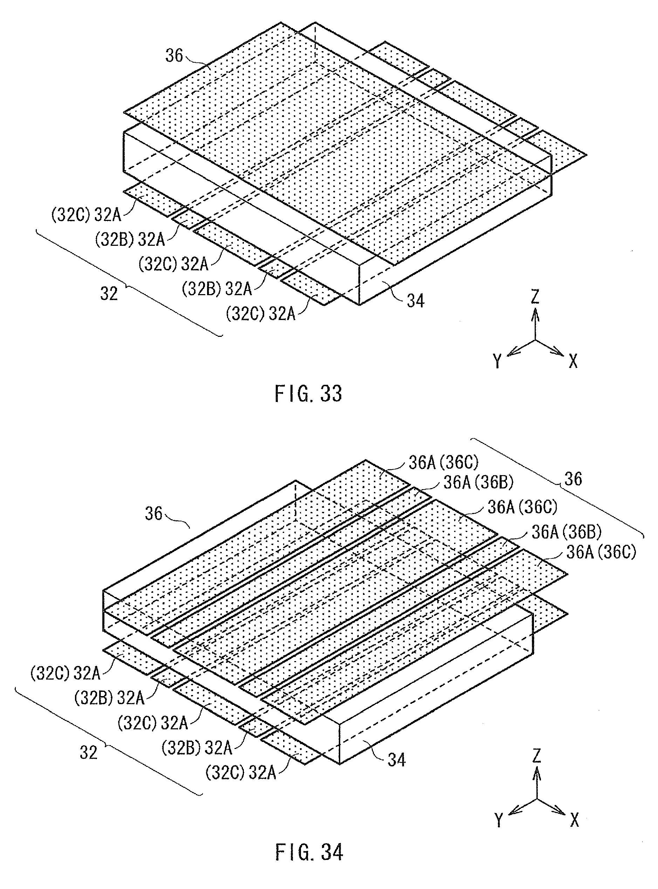

Moreover, in the above-described respective embodiments and modification examples thereof, the lower electrode 32 is configured of a solid film, and the upper electrode 36 are configured of a plurality of strip-shaped sub-electrodes 36A; however, for example, as illustrated in FIG. 33, the lower electrode 32 may be configured of a plurality of strip-shaped sub-electrodes 32A, and the upper electrode 36 may be configured of a solid film. In this case, each of the sub-electrodes 32A has the same configuration as that of each sub-electrode 36A.

[Fifth Modification Example]

Further, for example, as illustrated in FIG. 34, the lower electrode 32 may be configured of a plurality of strip-shaped sub-electrodes 32A, and the upper electrode 36 may be also configured of a plurality of strip-shaped sub-electrodes 36A.

[Sixth Modification Example]

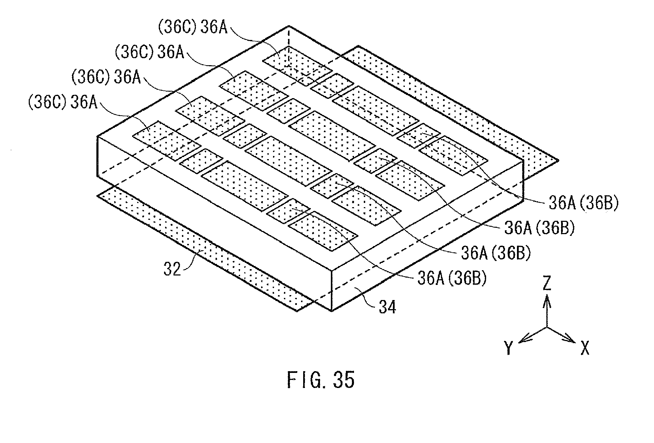

Moreover, for example, the lower electrode 32 may be configured of a solid film, and the upper electrode 36 may be configured of block-shaped sub-electrodes (not illustrated) with fine leading lines arranged in a matrix form. In this case, for example, as illustrated in FIG. 35, each of sub-electrodes included in a plurality of specific columns parallel to the light incident surface 10A configures the above-described sub-electrode 36B, and each of sub-electrodes included in other columns parallel to the light incident surface 10A configures the above-described sub-electrode 36C.

[Seventh Modification Example]

Moreover, in the above-described respective embodiments and modification examples thereof, the lower electrode 32 and the upper electrode 36 have linear edges, but may have nonlinear edges. For example, in each of sub-electrodes 36B and 36C, an edge adjacent to the sub-electrode 36C of the sub-electrode 36B may have an uneven shape. Likewise, in each of the sub-electrodes 36B and 36C, an edge adjacent to the sub-electrode 36B of the sub-electrode 36C may have an uneven shape. Moreover, in each of the sub-electrodes 32B and 32C, an edge adjacent to the sub-electrode 32C of the sub-electrode 32B may have an uneven shape. Likewise, in each of the sub-electrodes 32B and 32C, an edge adjacent to the sub-electrode 32B of the sub-electrode 32C may have an uneven shape.

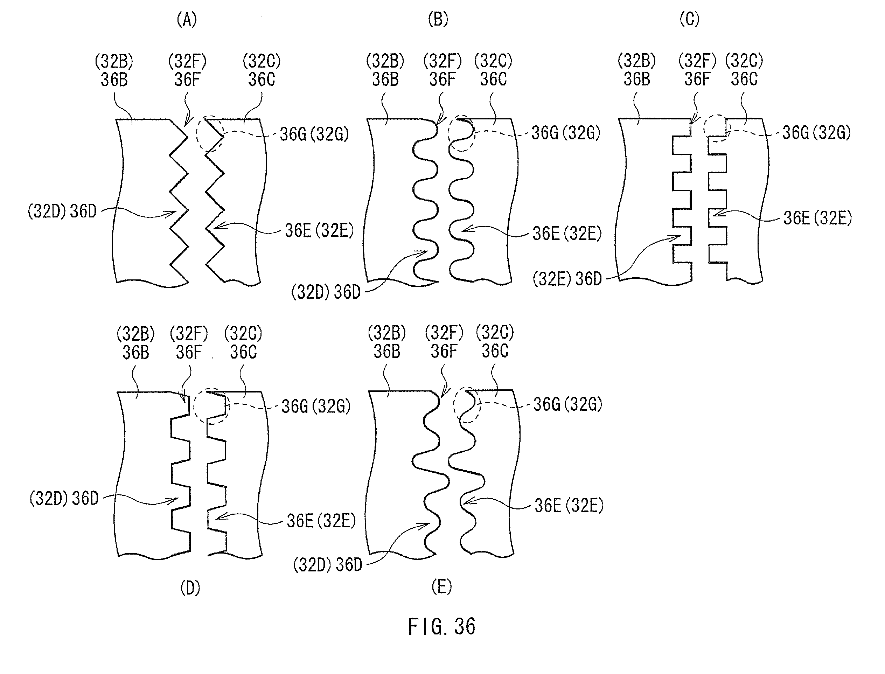

For example, as illustrated in FIGs. 36(A) to (E), the uneven shape formed in each of the sub-electrodes 32B, 32C, 36B and 36C maybe a zigzag shape, a waveform shape, a lump shape, a trapezoidal shape, or a random shape. It is to be noted that in FIGs. 36(A) to (E), 36B(32B) means 36B or 32B, and the same applies to other reference numerals.

The uneven shape of each sub-electrode 36B is configured of a plurality of projections arranged along the edge, and the uneven shape of each sub-electrode 36C is configured of a plurality of projections 36E arranged along the edge. For example, as illustrated in FIGs. 36(A) to (E), the plurality of projections 36D and the plurality of projections 36E are alternately arranged. Likewise, the uneven shape of each sub-electrode 32B is configured of a plurality of projections 32D arranged along the edge, and the uneven shape of each sub-electrode 32C is configured of a plurality of projections 32E arranged along the edge. For example, as illustrated in FIGs. 36(A) to (E), the plurality of projections 32D and the plurality of projections 32E are alternately arranged.

The width of a gap (a slit) between the edge with the uneven shape of each sub-electrode 36B and the edge with the uneven shape of each sub-electrode 36C is equal to or smaller than a predetermined width. Likewise, the width of a gap (slit) between the edge with the uneven shape of each sub-electrode 32B and the edge with the uneven shape of each sub-electrode 32C is equal to or smaller than a predetermined width. For example, as illustrated in FIGs. 36(A) to (E), a tip 36F of each of the projections 36D is arranged on an outer side of a recession 36G formed between two projections 36E adjacent to each other. Likewise, for example, as illustrated in FIGs. 36(A) to (E), a tip 32F of each of the projections 32D is arranged on an outer side of a recession 32G formed between two projections 32E adjacent to each other.

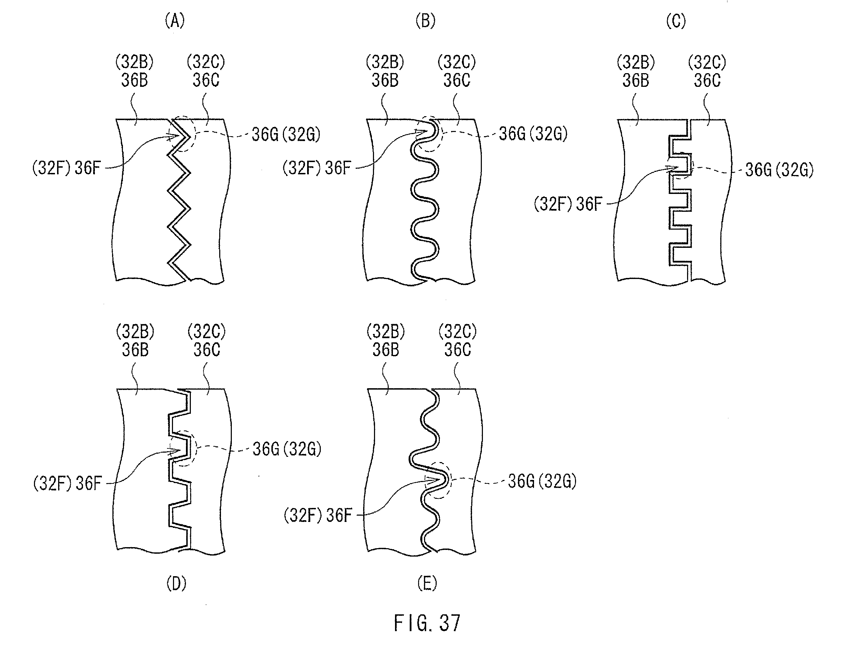

It is to be noted that, for example, as illustrated in FIGs. 37(A) to (E), the tip 36F of each projection 36D may be arranged in the recession 36G. Likewise, for example, as illustrated in FIGs. 37(A) to (E), the tip 32F of each projection 32D may be arranged in the recession 32G. In layouts illustrated in FIGs. 37(A) to (E), compared to layouts illustrated in FIGs. 36(A) to (E), the width of the slit is allowed to be further reduced.

An edge of a luminance profile of linear illumination light is allowed to be blurred by forming projections and recessions on an edge of an electrode; however, in the case where the edge of the luminance profile of the linear illumination light is intended not to be blurred too much, the width of the slit is preferably as small as possible. On the other hand, in the case where the edge of the luminance profile of the linear illumination light is willing to be blurred, the width of the silt is preferably prevented from being too small. In the case where the edge of the luminance profile of the linear illumination light is blurred, for example, when a viewer (not illustrated) moves, sudden switching from a display picture to another is preventable.

It is to be noted that in the sub-electrodes 36B and the sub-electrodes 36C, it is not necessary for both of edges adjacent to each other to have the uneven shape, and only one of them may have the uneven shape. Likewise, in the sub-electrodes 32B and the sub-electrodes 32C, it is not necessary for both of edges adjacent to each other to have the uneven shape, and only one of them may have the uneven shape.

[Eighth Modification Example]

Moreover, in the above-described respective embodiments and modification examples thereof, in the lower electrode 32 and the upper electrode 36, patterning is not performed on internal parts thereof; however, patterning may be performed on an internal part of at least one of the lower electrode 32 and the upper electrode 36. In this case, the pattern density of one electrode subjected to patterning of the lower electrode 32 and the upper electrode 36 varies depending on a distance from the light source 20.

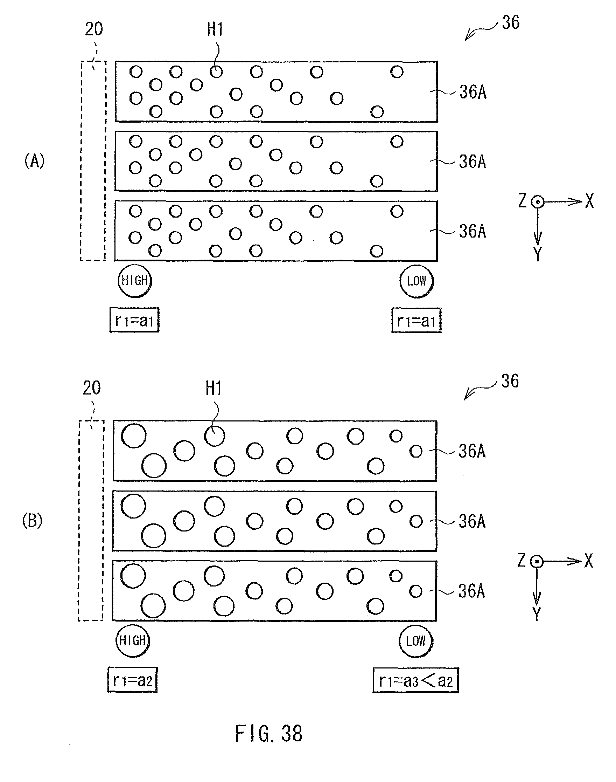

In the case where the sub-electrode 36A is subjected to patterning, for example, as illustrated in FIGs. 38(A) and (B), a plurality of holes H1 are formed in the sub-electrode 36A, and the density of the holes H1 in the entire upper electrode 36 varies depending on the distance from the light source 20. For example, as illustrated in FIGs. 38(A) and (B), the shape of the hole H1 is a circular shape. It is to be noted that the shape of the hole H1 may be any shape other than the circular shape, for example, an ellipse shape or a polygonal shape. In an example illustrated in FIG. 38(A), the diameter $r_1$ of the hole H1 is fixed ($R_1 = a_1$) irrespective of the distance from the light source 20, and the number of holes H1 per unit area is gradually decreased with an increase in the distance from the light source 20. Moreover, in an example illustrated in FIG. 38(B), the number of holes H1 per unit area is fixed irrespective of the distance from the light source 20, and the diameter $r_1$ of the hole H1 is gradually decreased with an increase in the distance from the light source 20. It is to be noted that in FIG. 38(B), the case where the diameter $r_1$ in proximity to the light source 20 is $a_2$, and the diameter $r_1$ at a longest distance from the light source 20 is $a_3$ ($<a_2$) is exemplified. Therefore, in both of the examples in FIGs. 38(A) an (B), the density of holes H1 (a proportion of the holes H1 per unit area) gradually becomes lower (is gradually decreased) with an increase in the distance from the light source 20. In other words, the pattern density of the upper electrode 36 (a proportion of a region except for the holes H1 of the upper electrode 36 per unit area) gradually becomes higher (is gradually increased) with an increase in the distance from the light source 20.

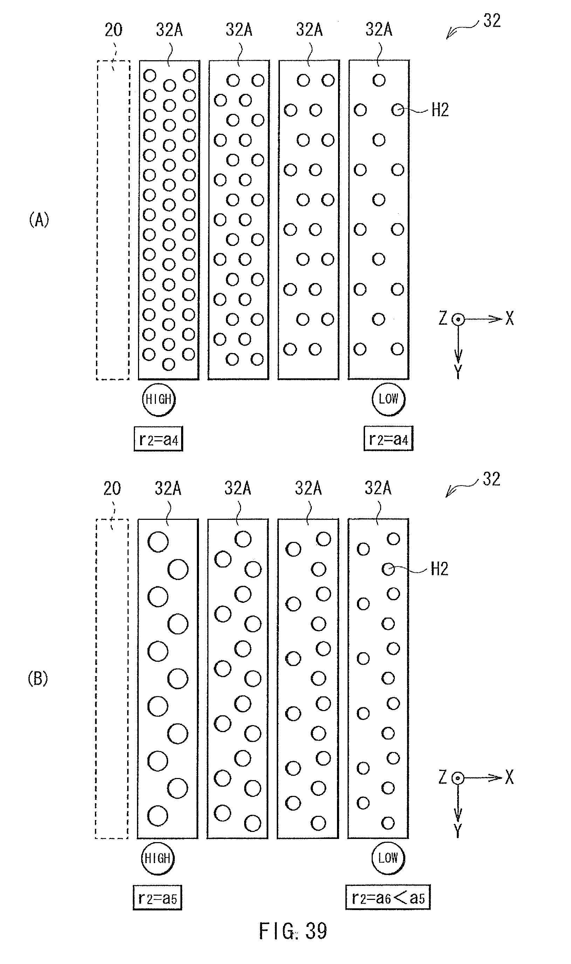

In the case where the sub-electrode 32A is subjected to patterning, for example, as illustrated in FIGs. 39(A) and (B), the sub-electrode 32A includes a plurality of holes H2, and the density of the holes H2 in the entire lower electrode 32 varies depending on the distance from the light source 20. In each sub-electrode 32A, the density of the holes H2 may vary depending on the distance from the light source 20, or may be fixed irrespective of the distance from the light source 20. The shape of the hole H2 may be any shape other than the illustrated shape, for example, an ellipse shape or a polygonal shape. In an example illustrated in FIG. 39(A), the diameter $r_2$ of the hole H2 is fixed ($r_2=a_4$) irrespective of the distance from the light source 20, and the number of holes per unit area is gradually decreased with an increase in the distance from the light source 20. Moreover, in an example illustrated in FIG. 39(B), the number of holes H2 per unit area is fixed irrespective of the distance from the light source 20, and the diameter $r_2$ of the hole H2 is gradually decreased with an increase in the distance from the light source 20. It is to be noted that in FIG. 39(B), the case where the diameter $r_2$ in proximity to the light source 20 is $a_5$, and the diameter $r_2$ at a longest distance from the light source 20 is $a_6$ ($<a_5$) is exemplified. Therefore, in both of examples in FIGs. 39(A) and (B), the density of the holes H2 (a proportion of the holes H2 per unit area) gradually becomes lower (is gradually decreased) with an increase in the distance from the light source 20. In other words, the pattern density of the lower electrode 32 (a proportion of a region except for the holes H2 of the lower electrode 32 per unit area) gradually becomes higher (is gradually increased) with an increase in the distance from the light source 20.

In the case where both of the sub-electrodes 32A and 36A are subjected to patterning, the sub-electrode 36A is subjected to, for example, patterning as illustrated in FIG. 38(A) or FIG. 38(B), and the sub-electrode 32A is subjected to, for example, patterning illustrated in FIG. 39(A) or FIG. 39(B). It is to be noted that in the case where both of the sub-electrodes 32A and 36A are subjected to patterning, the patterning densities of both of the sub-electrodes 32A and 36A do not necessarily vary depending on the distance from the light source 20. In this case, it is only necessary for the pattern density of the sub-electrode 32A (the density of the holes H2) in the entire lower electrode 32 to vary depending on the distance from the light source 20, or it is only necessary for the pattern density of the sub-electrode 36A (the density of the holes H1) in the entire upper electrode 36 to vary depending on the distance from the light source 20.

In the case where both of the sub-electrodes 32A and 36A are subjected to patterning, the holes H1 may be disposed in positions perfectly facing the holes H2; however, the holes H1 are preferably disposed in positions facing some of the holes H2, or in positions not facing the holes H2. Moreover, in the case where both of the sub-electrodes 32A and 36A are subjected to patterning, the diameter of the hole H1 and the diameter of the hole H2 may be equal to or different from each other.

In this modification example, the internal part of at least one of the lower electrode 32 and the upper electrode 36 is subjected to patterning. Moreover, the pattern density of one electrode subjected to patterning of the lower electrode 32 and the upper electrode 36 varies depending on the distance from the light source 20 in the entire electrode. Therefore, a density distribution of a transparent region and a scattering region in a light emission region is allowed to have a desired distribution. Thus, luminance on the light source 20 side of the light emission region of the backlight 211 is allowed to be lower than that in the case where the light modulation element 30 is not provided, and luminance opposite to the light source 20 side of the light emission region of the backlight 211 is allowed to be higher than that in the case where the light modulation element 30 is not provided. As a result, for example, not only in the case where the entire light emission region of the backlight 211 is in a dark state, but also in the case where the entire light emission region of the backlight 211 is in a bright state, in-plane luminance is allowed to be uniform. Therefore, for example, in the case where white display is performed in a region close to the light source 20, and a region far from the light source 20, white luminances in both regions are allowed to be equal to each other. Moreover, for example, in the case where black display is performed in a region closer to the light source 20 than a region where white display is performed, and a region farther from the light source 20 than the region where white display is performed, black luminances in these regions are allowed to be equal to each other. Accordingly, in the modification example, while in-plane luminance is uniformized, a modulation ratio is allowed to be increased.

[Ninth Modification Example]

Further, in the above-described respective embodiments and modification examples thereof, the drive circuit 50 may apply, to respective sub-electrodes 36A, an equal voltage irrespective of the distance from the light source 20, or a voltage varying depending on the distance from the light source 20. Likewise, in the above-described respective embodiments and modification examples thereof, the drive circuit 50 may apply, to respective sub-electrodes 32A, an equal voltage irrespective of the distance from the light source 20, or a voltage varying depending on the distance from the light source 20.

As described above, in the case where a voltage varying depending on the distance from the light source 20 is applied to respective sub-electrodes 36A or respective sub-electrodes 32A, when illumination light allowing a part of a top surface of the backlight 211 to have white luminance is emitted, a possibility of causing a difference in the magnitude of white luminance between the case where the part to have white luminance is close to the light source 20 and the case where the part to have white luminance is far from the light source 20 is allowed to be reduced.

[Tenth Modification Example]

Moreover, in the above-described respective embodiments and modification examples thereof, for example, each sub-electrode 36A may be configured of, for example, a plurality of micro-electrodes. Likewise, each sub-electrode 32A may be configured of a plurality of micro-electrodes. Further, in the above-described embodiments and modification examples thereof, the upper electrode 36 is configured of a solid film, but the upper electrode 36 may be configured of a plurality of micro-electrodes. Likewise, the lower electrode 32 is configured of a solid film, but the lower electrode 32 may be configured of a plurality of micro-electrodes.

[Eleventh Modification Example]

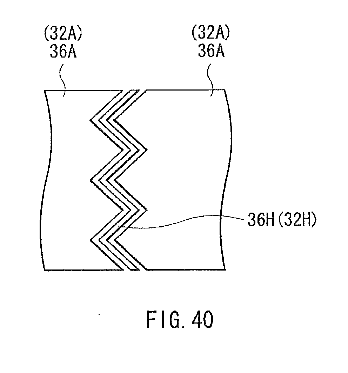

Further, in the above-described embodiments and modification examples thereof, in the case where edges adjacent to each other of the electrodes 36A have an uneven shape, for example, as illustrated in FIG. 40, a sub-electrode 36H extending along the uneven shape of the sub-electrode 36A may be further provided in a gap between the uneven shape of one sub-electrode 36A and the uneven shape of the other sub-electrode 36A adjacent to the one sub-electrode 36A. It is to be noted that in FIG. 40, 36A(32A) means 36A or 32A, and the same applied to other reference numerals. Likewise, in the case where edges adjacent to each other of the sub-electrodes 32A have an uneven shape, for example, as illustrated in FIG. 40, a sub-electrode 32H extending along the uneven shape of the edge of the electrode 32A may be provided in a gap between the uneven shape of one sub-electrode 32A and the uneven shape of the other sub-electrode 32A adjacent to the one sub-electrode 32A. In these cases, a power supply (not illustrated) applying a voltage to the sub-electrodes 36A, 36H, 32A, and 32H is provided, and a voltage satisfying the following expressions is preferably applied to the sub-electrodes 36A, 36H, 32A, and 32H from the power supply. In such a case, an in-plane change in luminance is allowed to be more moderate, and a boundary between a bright part and a dark part in illumination light is allowed to be further blurred.

$$V1 > V2 > V3$$

V1: Voltage to be applied to one of two sub-electrodes 36A adjacent to each other from the power supply
V2: Voltage to be applied to the sub-electrode 36H from the power supply
V3: Voltage to be applied to the other of the two sub-electrodes 36A adjacent to each other from the power supply

$$V4 > V5 > V6$$

V4: Voltage to be applied to one of two sub-electrodes 32A adjacent to each other from the power supply
V5: Voltage to be applied to the sub-electrode 32H from the power supply
V6: Voltage to be applied to the other of the two sub-electrodes 32A adjacent to each other from the power supply

[Twelfth Modification Example]

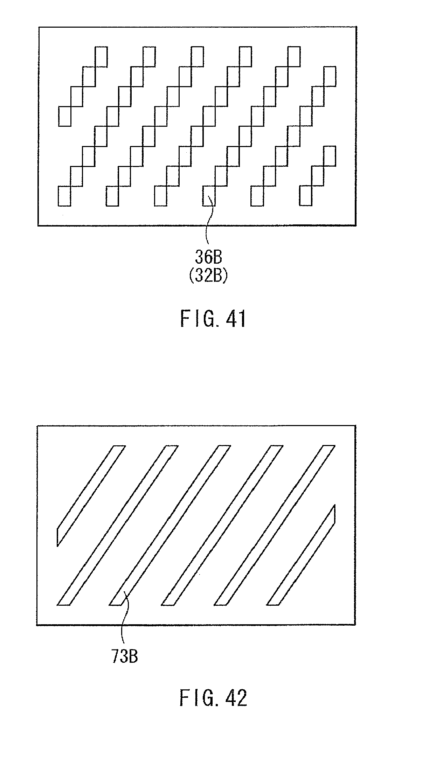

Moreover, in the above-described respective embodiments and modification examples thereof, each sub-electrode 36B or each sub-electrode 32B may be configured of, for example, a plurality of micro-electrodes. In this case, the plurality of micro-electrodes may be arranged in a rectangular form as a whole, or, for example, as illustrated in FIG. 41, a plurality of micro-electrodes 36B-1 and 36B-2 may be arranged in an oblique direction in a plane (in a step barrier form). Moreover, in the case where each sub-electrode 36B or each sub-electrode 32B extends in an oblique direction in a plane, or in the case where the above-described plurality of micro-electrodes 36B-1 and 36B-2 are arranged in an oblique direction in a plane, for example, as illustrated in FIG. 42, the sub-electrodes 73B in the parallax barrier 70 extend in the same direction (an oblique direction).

[Thirteenth Modification Example]

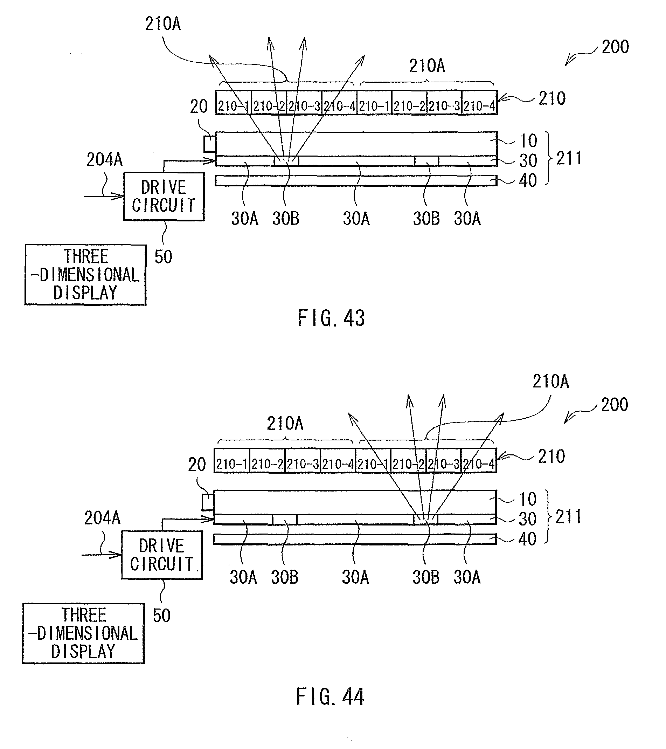

Further, in the above-described respective embodiments and modification examples thereof, a drive circuit (not illustrated) driving the display panel 210 may time-divisionally drive the display panel 210. In this case, the drive circuit 50 changes an emission point of linear illumination light in three-dimensional display of the backlight 211 in synchronization with display switching in the display panel 210. For example, as illustrated in FIG. 43, the drive circuit 50 allows linear illumination light to be emitted from a point corresponding to an odd-numbered electrode from the light source 20 of the plurality of sub-electrodes 36B (32B), and then as illustrated in FIG. 44, the drive circuit 50 allows linear illumination light to be emitted from a point corresponding to an even-numbered electrode from the light source 20 of the plurality of sub-electrodes 36B (32B). At this time, the drive circuit (not illustrated) driving the display panel 210 applies a voltage based on a picture signal to a pixel corresponding to a region where linear illumination light enters in a plurality of pixels of the display panel 210. When this switching is performed at high speed, a viewer perceives pixels whose number is twice as large as the number of pixels illuminating at a moment, thereby allowing substantial resolution to be enhanced.

**Claims**

1. A display comprising:

a display panel including a plurality of pixels arranged in a matrix form, the plurality of pixels being driven in response to an image signal for two-dimensional display or three-dimensional display; and
an illumination device illuminating the display panel,
wherein the illumination device includes:

a first transparent member and a second transparent member being separated from and facing each other;
a light source disposed on a side surface of the first transparent member;
a first electrode disposed on a surface of the first transparent member;
a second electrode disposed on a surface of the second transparent member;
a light modulation layer disposed in a gap between the first transparent member and the second transparent member, and exhibiting a scattering property or transparency with respect to light from the light source, depending on the magnitude of an electric field; and
a drive section driving the light modulation layer with use of the first electrode and the second electrode,
the light modulation layer includes a first region and a second region both having optical anisotropy, and having response speeds with respect to an electric field, the response speeds being different from each other,
the first region mainly includes a liquid crystal material,
the second region mainly includes a polymer material, and has a streaky structure, a porous structure, or a rod-like structure with a response speed with respect to the electric field, the response speed being slower than that of the first region,
at least one of the first electrode and the second electrode is configured of a plurality of sub-electrodes, and
in the case where three-dimensional display is performed, while the drive section applies, to a plurality of specific first sub-electrodes in the plurality of sub-electrodes, a voltage allowing the light modulation layer to exhibit the scattering property, the drive section applies, to a plurality of second sub-electrodes other than the plurality of first sub-electrodes in the plurality of sub-electrodes, a voltage allowing the light modulation layer to exhibit transparency, thereby allowing a plurality of linear illumination light rays to be emitted.

2. The display according to claim 1, wherein the streaky structure, the porous structure or the rod-like structure has a long axis in a direction parallel to a light incident surface of the first transparent member, the light incident surface being a side surface where light from the light source enters of the first transparent member.

3. The display according to claim 2, wherein the streaky structure, the porous structure or the rod-like structure has a long axis in a direction parallel to the light incident surface as well as intersecting with a top surface of the first transparent member at a slight angle.

4. The display according to claim 3, wherein the light modulation layer has an anisotropic scattering property that scattering in a thickness direction thereof is larger than that in a direction parallel to the light incident surface.

5. The display according to claim 3, wherein the light modulation layer has a property that in light propagating in the thickness direction of the light modulation layer, a scattering property with respect to a polarized light component in a direction parallel to the light incident surface as well as orthogonal to the thickness direction of the light modulation layer is larger than that with respect to a polarized light component in a direction perpendicular to the light incident surface.

6. The display according to any one of claims 1 to 5, wherein
the plurality of first sub-electrodes and the plurality of second sub-electrodes are arranged alternately one by one or plural by plural in a direction where the plurality of linear illumination light rays are arranged.

7. The display according to claim 6, wherein the plurality of first sub-electrodes are arranged with a pitch corresponding to a pixel pitch in the case where three-dimensional display is performed in the display, in the direction where the plurality of linear illumination light rays are arranged.

8. The display according to claim 6, further comprising a light transmission region control section on a light emission side of the illumination device, the light transmission region control section allowing a light emission region of the illumination device to be limited to a region facing the plurality of first electrodes, or a region corresponding thereto, and to extend to a region facing a region where the first electrode and the second electrode face each other, or a region corresponding thereto.

9. The display according to claim 6, wherein the first sub-electrodes in the plurality of sub-electrodes are disposed adjacent to the second sub-electrodes in the plurality of sub-electrodes, respectively, and each have an uneven shape on an edge adjacent to the second sub-electrode.

10. The display according to claim 6, wherein in the case where two-dimensional display is performed, the drive section applies, to all of the plurality of sub-electrodes, a voltage allowing the light modulation layer to exhibit the scattering property, to allow entirely bright planar illumination light to be emitted, or while the drive section applies, to some of the plurality of sub-electrodes, a voltage allowing the light modulation layer to exhibit the scattering property, the drive section applies, to one or a plurality of sub-electrodes to which the voltage allowing the light modulation layer to exhibit the scattering property is not applied in the plurality of sub-electrodes, a voltage allowing the light modulation layer to exhibit transparency, to allow partially dark planar illumination light to be emitted.

11. An illumination device for a display allowed to perform two-dimensional display and three-dimensional display, the illumination device comprising:

a first transparent member and a second transparent member being separated from and facing each other;
a light source disposed on a side surface of the first transparent member;
a first electrode disposed on a surface of the first transparent member;
a second electrode disposed on a surface of the second transparent member;
a light modulation layer disposed in a gap between the first transparent member and the second transparent member, and exhibiting a scattering property or transparency with respect to light from the light source, depending on the magnitude of an electric field; and
a drive section driving the light modulation layer with use of the first electrode and the second electrode,
wherein the light modulation layer includes a first region and a second region both having optical anisotropy, and having response speeds with respect to an electric field, the response speeds being different from each other,
the first region mainly includes a liquid crystal material,
the second region mainly includes a polymer material, and has a streaky structure, a porous structure, or a rod-like structure with a response speed with respect to the electric field, the response speed being slower than that of the first region,
at least one of the first electrode and the second electrode is configured of a plurality of sub-electrodes, and
in the case where three-dimensional display is performed, while the drive section applies, to a plurality of specific first sub-electrodes in the plurality of sub-electrodes, a voltage allowing the light modulation layer to exhibit the scattering property, the drive section applies, to a plurality of second sub-electrodes other than the plurality of first sub-electrodes in the plurality of sub-electrodes, a voltage allowing the light modulation layer to exhibit transparency, thereby allowing a plurality of linear illumination light rays to be emitted.

**Amended claims under Art. 19.1 PCT**

1. (Amended) A display comprising:

a display panel including a plurality of pixels arranged in a matrix form, the plurality of pixels being driven in response to an image signal for two-dimensional display or three-dimensional display; and
an illumination device illuminating the display panel,
wherein the illumination device includes:

a first transparent member and a second transparent member being separated from and facing each other;
a light source disposed on a side surface of the first transparent member;
a first electrode disposed on a surface of the first transparent member;
a second electrode disposed on a surface of the second transparent member;
a light modulation layer disposed in a gap between the first transparent member and the second transparent member, and exhibiting a scattering property or transparency with respect to light from the light source, depending on the magnitude of an electric field; and

a drive section driving the light modulation layer with use of the first electrode and the second electrode,

the light modulation layer includes a first region and a second region having response speeds with respect to an electric field, the response speeds being different from each other,

the first region mainly includes a liquid crystal material,

the second region mainly includes a polymer material,

at least one of the first electrode and the second electrode is configured of a plurality of sub-electrodes, and

in the case where three-dimensional display is performed, while the drive section applies, to a plurality of specific first sub-electrodes in the plurality of sub-electrodes, a voltage allowing the light modulation layer to exhibit the scattering property, the drive section applies, to a plurality of second sub-electrodes other than the plurality of first sub-electrodes in the plurality of sub-electrodes, a voltage allowing the light modulation layer to exhibit transparency, thereby allowing a plurality of linear illumination light rays to be emitted.

**2.** (Amended) The display according to claim 1, wherein

the light modulation layer has optical anisotropy, and the second region has a streaky structure, a porous structure, or a rod-like structure with a response speed with respect to the electric field, the response speed being slower than that of the first region.

**3.** (Amended) The display according to claim 2, wherein

the streaky structure, the porous structure or the rod-like structure has a long axis in a direction parallel to a light incident surface of the first transparent member, the light incident surface being a side surface where light from the light source enters of the first transparent member.

**4.** (Amended) The display according to claim 3, wherein

the streaky structure, the porous structure or the rod-like structure has a long axis in a direction parallel to the light incident surface as well as intersecting with a top surface of the first transparent member at a slight angle.

**5.** (Amended) The display according to claim 4, wherein

the light modulation layer has an anisotropic scattering property that scattering in a thickness direction thereof is larger than that in a direction parallel to the light incident surface.

**6.** (Amended) The display according to claim 4, wherein

the light modulation layer has a property that in light propagating in the thickness direction of the light modulation layer, a scattering property with respect to a polarized light component in a direction parallel to the light incident surface as well as orthogonal to the thickness direction of the light modulation layer is larger than that with respect to a polarized light component in a direction perpendicular to the light incident surface.

**7.** (Amended) The display according to any one of claims 1 to 6, wherein

the plurality of first sub-electrodes and the plurality of second sub-electrodes are arranged alternately one by one or plural by plural in a direction where the plurality of linear illumination light rays are arranged.

**8.** (Amended) The display according to claim 7, wherein

the plurality of first sub-electrodes are arranged with a pitch corresponding to a pixel pitch in the case where three-dimensional display is performed in the display, in the direction where the plurality of linear illumination light rays are arranged.

**9.** (Amended) The display according to claim 7, further comprising a light transmission region control section on a light emission side of the illumination device, the light transmission region control section allowing a light emission region of the illumination device to be limited to a region facing the plurality of first electrodes, or a region corresponding thereto, and to extend to a region facing a region where the first electrode and the second electrode face each other, or a region corresponding thereto.

**10.** (Amended) The display according to claim 7, wherein

the first sub-electrodes in the plurality of sub-electrodes are disposed adjacent to the second sub-electrodes in the plurality of sub-electrodes, respectively, and each have an uneven shape on an edge adjacent to the second sub-electrode.

**11.** (Amended) The display according to claim 7, wherein

in the case where two-dimensional display is performed, the drive section applies, to all of the plurality of sub-electrodes, a voltage allowing the light modulation layer to exhibit the scattering property, to allow entirely bright planar illumination light to be emitted, or while the drive section applies, to some of the plurality of sub-electrodes, a voltage allowing the light modulation layer to exhibit the scattering property, the drive section applies, to one or a plurality of sub-electrodes to which the voltage allowing the light modulation layer to exhibit the scattering property is not applied in the plurality of sub-electrodes, a voltage allowing the light modulation layer to exhibit transparency, to allow partially dark planar illumination light to be emitted.

**12.** (Added) An illumination device for a display allowed to perform two-dimensional display and three-dimensional display, the illumination device comprising:

a first transparent member and a second transparent member being separated from and facing each other;
a light source disposed on a side surface of the first transparent member;
a first electrode disposed on a surface of the first transparent member;
a second electrode disposed on a surface of the second transparent member;
a light modulation layer disposed in a gap between the first transparent member and the second transparent member, and exhibiting a scattering property or transparency with respect to light from the light source, depending on the magnitude of an electric field; and
a drive section driving the light modulation layer with use of the first electrode and the second electrode,
wherein the light modulation layer includes a first region and a second region both having response speeds with respect to an electric field, the response speeds being different from each other,
the first region mainly includes a liquid crystal material,
the second region mainly includes a polymer material,
at least one of the first electrode and the second electrode is configured of a plurality of sub-electrodes, and
in the case where three-dimensional display is performed, while the drive section applies, to a plurality of specific first sub-electrodes in the plurality of sub-electrodes, a voltage allowing the light modulation layer to exhibit the scattering property, the drive section applies, to a plurality of second sub-electrodes other than the plurality of first sub-electrodes in the plurality of sub-electrodes, a voltage allowing the light modulation layer to exhibit transparency, thereby allowing a plurality of linear illumination light rays to be emitted.

~100

| TRANSMITTER-SIDE APPARATUS |

100A

| RECEIVER-SIDE APPARATUS |

~200

FIG. 1

FIG. 2

EP 2 426 401 A1

EP 2 426 401 A1

FIG. 3

FIG. 4

FIG. 5

FIG. 6

(A)

ABSORPTION (%)

TYPICAL ITO FILM
ITO FILM WITH IMPROVED FILM PROPERTIES
A1
A2

WAVELENGTH (nm)

(B)

BLACK DISPLAY

$\Delta$u'v'

TYPICAL ITO FILM

ITO FILM WITH IMPROVED
FILM PROPERTIES

DISTANCE FROM LIGHT SOURCE (mm)

(C)

WHITE DISPLAY

$\Delta$u'v'

TYPICAL ITO FILM

ITO FILM WITH IMPROVED
FILM PROPERTIES

DISTANCE FROM LIGHT SOURCE (mm)

FIG. 7

FIG. 8

(A)

(34A) (34B)

34

(34A)

(34B)

34B

34A

(B)

AX1

AX2

AX1, AX2

θ1

(34A)

(34B)

(C)

L1

L1

L2

34

L2

34B

34A

Z

X ⊗ → Y

FIG. 9

FIG. 10

FIG. 11

(A)

(B)

20 μm

FIG. 12

(A)

32-1, 36-1
31, 37

(B)

32, 36
31, 37

(C)

33, 35
32, 36
31, 37

FIG. 13

(A)

38
33
32
31

(B)

39
35
36
37

(C)

35
36
37

41          39

FIG. 14

(A)

37
36
35
33
32
31

41                     39  38

↓—L3    ↓—L3    ↓—L3         ↘—30

(B)

37
36
35
33
32
31

34                     39  38

(C)

10
30

F I G. 15

P2

210A                                                    210A

                                                            200

20    210-1|210-2|210-3|210-4|210-1|210-2|210-3|210-4    210

204A                                                      10
                                                          30  }211
DRIVE                                                     40
CIRCUIT

        30A   30B        30A      30B   30A

THREE        50
-DIMENSIONAL
DISPLAY

FIG. 16

                                                            200

210B                                                    210

20                                                       10
204A                                                     30  }211
DRIVE                                                    40
CIRCUIT

TWO        50
-DIMENSIONAL
DISPLAY

FIG. 17

(A)

34A    34B

RUBBING DIRECTION

Z ⊙ ➤X

Y

20    34

(B)

20    34A    34B    34

Z

Y ⊙ ➤X

FIG. 18

(A)

34A    34B

RUBBING DIRECTION

Z ⊙ ➤X

Y

20    34

(B)

20    34A    34B    34

Z

Y ⊙ ➤X

FIG. 19

(A)

(B)

FIG. 20

FIG. 21

FIG. 22

FIG. 23

(A)

(B)

(C)

F I G. 24

(A)

(B)

(C)

FIG. 25

(A)

(64A) (64B)

64

(64A)

(64B)

64B

64A

(B)

AX3

AX4

θ3

AX3, AX4

(64A)

(64B)

(C)

L1

L1

L2

64

L2

64B

64A

Z

X

Y

FIG. 26

(64A) (64B)

64

(64A)

(64B)

(A)

64B

64A

(B)

AX3

AX4

AX3

AX4

θ3

θ4

(64A)

(64B)

64

(C)

L2

64B

64A

L1

L1

L2

FIG. 27

FIG. 28

FIG. 29

FIG. 30

FIG. 31

FIG. 32

36

(32C) 32A
(32B) 32A
(32C) 32A
32
(32B) 32A
(32C) 32A

34

Z
Y X

FIG. 33

36A (36C)
36A (36B)
36A (36C)
36A (36B)
36A (36C)

36

36

(32C) 32A
(32B) 32A
(32C) 32A
32
(32B) 32A
(32C) 32A

34

Z
Y X

FIG. 34

(36C) 36A
(36C) 36A
(36C) 36A
(36C) 36A

36A (36B)
36A (36B)
36A (36B)
36A (36B)

32

34

Z
Y X

F I G. 35

FIG. 36

(A)

(32B) 36B    (32C) 36C

(32F) 36F — — — 36G (32G)

(B)

(32B) 36B    (32C) 36C

(32F) 36F — — — 36G (32G)

(C)

(32B) 36B    (32C) 36C

(32F) 36F — — — 36G (32G)

(D)

(32B) 36B    (32C) 36C

(32F) 36F — — — 36G (32G)

(E)

(32B) 36B    (32C) 36C

(32F) 36F — — — 36G (32G)

FIG. 37

FIG. 38

FIG. 39

FIG. 40

36B
(32B)

FIG. 41

73B

FIG. 42

210A

210A

200

20

210-1 210-2 2|10-3 210-4 210-1 210-2 210-3 210-4

210

204A

10
30
40

211

DRIVE
CIRCUIT

30A  30B     30A     30B  30A

THREE
-DIMENSIONAL
DISPLAY

50

FIG. 43

210A

200

210A

20

210-1 210-2 210-3 210-4 210-1 210-2 2|10-3 2|10-4

210

204A

10
30
40

211

DRIVE
CIRCUIT

30A  30B     30A     30B  30A

THREE
-DIMENSIONAL
DISPLAY

50

FIG. 44

<table>
<tr><td colspan="2">**INTERNATIONAL SEARCH REPORT**</td><td>International application No.<br>PCT/JP2011/054645</td></tr>
</table>

A. CLASSIFICATION OF SUBJECT MATTER
*F21S2/00*(2006.01)i, *F21V9/10*(2006.01)i, *G02F1/1334*(2006.01)i, *G02F1/13357*(2006.01)i, *G02F1/1347*(2006.01)i, *F21Y101/02*(2006.01)n

According to International Patent Classification (IPC) or to both national classification and IPC

B. FIELDS SEARCHED

Minimum documentation searched (classification system followed by classification symbols)
F21S2/00, F21V9/10, G02F1/1334, G02F1/13357, G02F1/1347, F21Y101/02

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-514273 A  (Koninklijke Philips Electronics N.V.),<br>31 May 2007 (31.05.2007),<br>entire text; all drawings<br>& US 2007-91638 A1      & US 76226643 B2<br>& GB 326005 D            & EP 1682932 A<br>& WO 2005-45488 A1       & KR 10-2006-114694 A<br>& CN 1875302 A | 1-7,10,11<br>8,9 |
| Y<br>A | JP 2007-94038 A  (Toshiba Matsushita Display Technology Co., Ltd.),<br>12 April 2007 (12.04.2007),<br>paragraphs [0021] to [0025]; fig. 4, 5<br>& US 2007-69974 A1 | 1-7,10,11<br>8,9 |

| ☒  Further documents are listed in the continuation of Box C. | ☐  See patent family annex. |
|---|---|

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>27 April, 2011 (27.04.11) | Date of mailing of the international search report<br>17 May, 2011 (17.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/054645

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2007-57925 A  (NEC Corp.),<br>08 March 2007 (08.03.2007),<br>paragraphs [0064] to [0066]; fig. 8<br>& US 2007-97290 A1      & CN 1920631 A | 1-7,10,11<br>8,9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H3119889 B

- JP H11285030 B